# EUROPEAN PATENT APPLICATION

(11) **EP 4 654 735 A1**
(43) Date of publication of application: **26.11.2025**
(21) Application number: 24755940.4
(22) Date of filing: 26.01.2024
(51) Int. Cl.: H04W 76/10

(54) **COMMUNICATION METHOD AND COMMUNICATION APPARATUS**

(30) Priority: 13.02.2023 CN 202310138223
(71) Applicant: Huawei Technologies Co., Ltd., Shenzhen, Guangdong 518129 (CN)
(72) Inventor: LI, Lun, Shenzhen, Guangdong 518129 (CN); WU, Yizhuang, Shenzhen, Guangdong 518129 (CN); LI, Yan, Shenzhen, Guangdong 518129 (CN); LI, Yongcui, Shenzhen, Guangdong 518129 (CN)
(74) Representative: Gill Jennings & Every LLP
(86) International application number: PCT/CN2024/074148
(87) International publication number: WO 2024/169565

(57) **Abstract**

A communication method is provided, including: A terminal device receives a first message from a first network element through a first access network device, where the first message is used to activate security protection for a first non-access stratum connection between the terminal device and the first network element. The terminal device generates a first security context corresponding to the first non-access stratum connection in response to the first message. The terminal device sends, to a second network element through a second access network device, a first establishment request security-protected based on the first security context, where the first establishment request is used to request to establish a second non-access stratum connection between the terminal device and the second network element. A security connection establishment request is security-protected by using a generated security context, thereby improving security of establishing a non-access stratum connection.

## Description

This application claims priority to Chinese Patent Application No. 202310138223.3, filed with the China National Intellectual Property Administration on February 13, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A 5th generation (5th generation, 5G) mobile communication system architecture includes two parts: an access network and a core network. A message that is not processed by an access node is referred to as a non-access stratum message, for example, a message sent by a terminal device to a subsequent node through a radio access node. A termination point of transmission of the non-access stratum message in the 5G core network is an access and mobility management function (access and mobility management function, AMF). Other types of non-access stratum messages other than a mobility management (Mobility management, MM) non-access stratum message are first sent by the terminal device to the AMF through the access network, and then routed to another network element (network function, NF) by the AMF. Therefore, in a current protocol, a non-access stratum security connection establishment procedure is defined as establishment of a security connection between the terminal device and the AMF.

To enable communication between the terminal device and different core network elements to be independent, a distributed non-access stratum architecture is defined, and communication between the terminal device and a core network element other than the AMF does not need to be performed by the AMF, that is, the terminal device may separately communicate with different core network elements through an access network device. However, a current non-access stratum security connection establishment procedure is not applicable to the distributed non-access stratum architecture. Therefore, how to design a non-access stratum security connection establishment manner applicable to the distributed non-access stratum architecture becomes an urgent problem to be resolved.

### SUMMARY

This application provides a communication method, to establish a non-access stratum security connection in a distributed non-access stratum architecture.

According to a first aspect, a communication method is provided. The method may be performed by a terminal device, or may be performed by a component (for example, a chip or a circuit) of the terminal device. This is not limited. For ease of description, the following uses an example in which the method is performed by the terminal device for description.

The communication method includes: The terminal device receives a first message from a first network element through a first access network device, where the first message is used to activate security protection for a first non-access stratum connection between the terminal device and the first network element. The terminal device generates a first security context corresponding to the first non-access stratum connection in response to the first message. The terminal device sends, to a second network element through a second access network device, a first establishment request security-protected based on the first security context, where the first establishment request is used to request to establish a second non-access stratum connection between the terminal device and the second network element. The first access network device and the second access network device are a same device or different devices.

Based on the foregoing solution, in a process of establishing the first non-access stratum connection to the first network element, after receiving the first message from the first network element for activating security protection for the first non-access stratum connection between the terminal device and the first network element (or triggering establishment of the first non-access stratum connection between the terminal device and the first network element), the terminal device generates the first security context corresponding to the first non-access stratum connection; and in a subsequent process of establishing the second non-access stratum connection to the second network element, the terminal device may respectively establish a plurality of non-access stratum connections to a plurality of core network elements by using the first establishment request security-protected based on the first security context. The non-access stratum security connection establishment method may be applied to a distributed non-access stratum architecture. In addition, in the non-access stratum security connection establishment method, the terminal device may perform security protection on a security connection establishment request by using a generated security context, thereby improving security of establishing a non-access stratum security connection.

With reference to the first aspect, in some implementations of the first aspect, the terminal device determines that a non-access stratum type to which the first non-access stratum connection belongs is a first non-access stratum type. The first non-access stratum type represents that the first non-access stratum connection is a connection between the terminal device and a network element of a first network element type, and a type of the first network element is the first network element type. That the terminal device generates the first security context corresponding to the first non-access stratum connection in response to the first message includes: The terminal device generates the first security context corresponding to the first non-access stratum connection based on the first non-access stratum type, where the first security context is used to perform security protection on communication between the terminal device and the first network element.

Based on the foregoing solution, in a process of generating a security context, the terminal device considers a non-access stratum type to which a non-access stratum connection belongs, so that different security contexts can be generated for non-access stratum connections of different non-access stratum types. Use of a plurality of security contexts can enhance flexibility and security of establishing a non-access stratum security connection.

With reference to the first aspect, in some implementations of the first aspect, the first message includes first indication information indicating that the non-access stratum type to which the first non-access stratum connection belongs is the first non-access stratum type. That the terminal device determines that the non-access stratum type to which the first non-access stratum connection belongs is the first non-access stratum type includes: The terminal device determines, based on the first indication information, that the non-access stratum type to which the first non-access stratum connection belongs is the first non-access stratum type. The first indication information may be implemented in a plurality of manners, including but not limited to an information element carried in the first message or the first message.

Based on the foregoing solution, when the first message includes the first indication information indicating the first non-access stratum type to which the first non-access stratum connection belongs, the terminal device may determine, based on the received first indication information, the first non-access stratum type to which the first non-access stratum connection belongs; or when the first message does not explicitly carry the indication information indicating the first non-access stratum type to which the first non-access stratum connection belongs, the terminal device may indirectly determine, based on a type of the first message, the first non-access stratum type to which the first non-access stratum connection belongs. In other words, based on the foregoing solution, the terminal device may determine, in different manners, the first non-access stratum type to which the first non-access stratum connection belongs, thereby improving solution flexibility.

With reference to the first aspect, in some implementations of the first aspect, the method further includes: The terminal device receives a second message from the second network element, where the second message is used to activate security protection for the second non-access stratum connection. The terminal device generates a second security context corresponding to the second non-access stratum connection in response to the second message. The terminal device performs security protection on communication between the terminal device and the second network element based on the second security context.

Based on the foregoing solution, in a process of establishing the second non-access stratum connection between the terminal device and the second network element, after receiving the second message from the second network element for activating security protection for the second non-access stratum connection, the terminal device generates the second security context used to establish the second non-access stratum connection, and subsequently communicates with the second network element based on the second security context. In other words, the terminal device may generate different security contexts for different non-access stratum connections, thereby enhancing flexibility and security of establishing a non-access stratum connection.

With reference to the first aspect, in some implementations of the first aspect, the second message includes second indication information indicating that a non-access stratum type to which the second non-access stratum connection belongs is a second non-access stratum type. The second non-access stratum type represents that the second non-access stratum connection is a connection between the terminal device and a network element of a second network element type, and a type of the second network element is the second network element type.

With reference to the first aspect, in some implementations of the first aspect, the second message further includes a first identifier, and the first identifier is used to determine the second network element. The method further includes: The terminal device receives a second identifier from the first network element through the first non-access stratum connection, where the second identifier is an identifier that is determined by the first network element and that identifies the second network element. The terminal device determines, based on the first identifier and the second identifier, whether the second network element is an authorized network element.

Based on the foregoing solution, the terminal device may determine, based on the first identifier received from the second network element and the second identifier received from the first network element, whether the second network element is an authorized network element, to prevent another unauthorized network element from establishing a non-access stratum connection to the terminal device, thereby enhancing security.

With reference to the first aspect, in some implementations of the first aspect, that the terminal device sends, to the second network element through the second access network device, the first establishment request security-protected based on the first security context includes:

The terminal device sends a third message to the access network device, where the third message includes a first parameter and the first establishment request security-protected based on the first security context, and the first parameter is used by the access network device to determine the second network element type to which the second network element belongs.

Based on the foregoing solution, the terminal device may include the first parameter in the third message, so that the access network device can determine an identifier of the second network element based on the first parameter, and learn of an object to which a security connection establishment request for establishing a non-access stratum connection should be forwarded.

With reference to the first aspect, in some implementations of the first aspect, the first parameter includes service information that can be processed by the network element of the second network element type and/or type information indicating that the non-access stratum type of the second non-access stratum connection is the second non-access stratum type; and the second non-access stratum type represents that the second non-access stratum connection is a connection between the terminal device and the network element of the second network element type.

With reference to the first aspect, in some implementations of the first aspect, the third message further includes third indication information, and the third indication information indicates that the second non-access stratum connection is an N^{th} non-access stratum connection, where N is an integer greater than 1.

With reference to the first aspect, in some implementations of the first aspect, before the terminal device receives the first message from the first network element through the first access network device, the method further includes: The terminal device sends a second establishment request to the first network element through the first access network device, where the second establishment request is used to request to establish the first non-access stratum connection between the terminal device and the first network element.

With reference to the first aspect, in some implementations of the first aspect, that the terminal device sends the second establishment request to the first network element through the first access network device includes: The terminal device sends a fourth message to the first access network device, where the fourth message includes the second establishment request and a second parameter, and the second parameter is used by the access network device to determine the first network element type to which the first network element belongs.

With reference to the first aspect, in some implementations of the first aspect, the second parameter includes service information that can be processed by the network element of the first network element type and/or type information indicating that the non-access stratum type of the first non-access stratum connection is the first non-access stratum type; and the first non-access stratum type represents that the first non-access stratum connection is a connection between the terminal device and the network element of the first network element type.

With reference to the first aspect, in some implementations of the first aspect, the first establishment request security-protected based on the first security context includes: a first establishment request encrypted based on the first security context.

According to a second aspect, a communication method is provided. The method may be performed by an access network device, or may be performed by a chip or a circuit disposed in the access network device. This is not limited in this application. For convenience, the following uses an example in which the method is performed by the access network device for description.

The communication method includes: The access network device receives a third message from a terminal device, where the third message includes a first parameter and a first establishment request security-protected based on a first security context, and the first establishment request is used to request to establish a second non-access stratum connection between the terminal device and a first core network element. The access network device determines a second network element type based on the first parameter, where the second network element type represents a type of the first core network element. The access network device determines an identifier of a second network element based on the second network element type. The access network device sends, to the second network element, the first establishment request security-protected based on the first security context.

With reference to the second aspect, in some implementations of the second aspect, the first parameter includes service information that can be processed by a network element of the second network element type and/or type information indicating that a non-access stratum type of the second non-access stratum connection is a second non-access stratum type; and the second non-access stratum type represents that the second non-access stratum connection is a connection between the terminal device and the network element of the second network element type.

With reference to the second aspect, in some implementations of the second aspect, the third message further includes third indication information, and the third indication information indicates that the second non-access stratum connection is an N^{th} non-access stratum connection, where N is an integer greater than 1.

With reference to the second aspect, in some implementations of the second aspect, the method further includes: The access network device receives a fourth message from the terminal device, where the fourth message includes a second establishment request and a second parameter, and the second establishment request is used to request to establish a first non-access stratum connection between the terminal device and a second core network element. The access network device determines a first network element type based on the second parameter, where the first network element type represents a type of the second core network element. The access network device determines an identifier of a first network element based on the first network element type. The access network device sends the second establishment request to the first network element.

With reference to the second aspect, in some implementations of the second aspect, the second parameter includes service information that can be processed by a network element of the first network element type and/or type information indicating that a non-access stratum type of the first non-access stratum connection is a first non-access stratum type; and the first non-access stratum type represents that the first non-access stratum connection is a connection between the terminal device and the network element of the first network element type.

With reference to the second aspect, in some implementations of the second aspect, the first establishment request security-protected based on the first security context includes: a first establishment request encrypted and/or integrity-protected based on the first security context.

For technical effects of the method shown in the second aspect and the possible designs of the second aspect, refer to the technical effects in the first aspect and the possible designs of the first aspect.

According to a third aspect, a communication method is provided. The method may be performed by a second network element, or may be performed by a chip or a circuit disposed in the second network element. This is not limited in this application. For convenience, the following uses an example in which the method is performed by the second network element for description.

The communication method includes: The second network element receives a first establishment request security-protected based on a first security context, where the first establishment request is used to request to establish a second non-access stratum connection between a terminal device and the second network element, and the first security context is used to perform security protection on communication between the terminal device and a first network element. The second network element obtains a second security context corresponding to the second non-access stratum connection in response to the first establishment request, where the second security context is used to perform security protection on communication between the terminal device and the second network element.

With reference to the third aspect, in some implementations of the third aspect, that the second network element obtains the second security context corresponding to the second non-access stratum connection in response to the first establishment request includes: The second network element receives the second security context; or the second network element generates the second security context based on a second non-access stratum type to which the second non-access stratum connection belongs.

With reference to the third aspect, in some implementations of the third aspect, the method further includes: The second network element sends a second message to the terminal device, where the second message is used to activate security protection for the second non-access stratum connection.

With reference to the third aspect, in some implementations of the third aspect, the second message includes second indication information indicating that a non-access stratum type to which the second non-access stratum connection belongs is the second non-access stratum type, where the second non-access stratum type represents that the second non-access stratum connection is a connection between the terminal device and a network element of a second network element type, and a type of the second network element is the second network element type.

With reference to the third aspect, in some implementations of the third aspect, the first establishment request security-protected based on the first security context includes: a first establishment request encrypted and/or integrity-protected based on the first security context.

For technical effects of the method shown in the third aspect and the possible designs of the third aspect, refer to the technical effects in the first aspect and the possible designs of the first aspect.

According to a fourth aspect, a communication method is provided. The method may be performed by a first network element, or may be performed by a component (for example, a chip or a circuit) of the first network element. This is not limited. For ease of description, the following uses an example in which the method is performed by the first network element for description.

The communication method includes: The first network element receives a second establishment request, where the second establishment request is used to request to establish a first non-access stratum connection between a terminal device and the first network element. The first network element obtains a first security context corresponding to the first non-access stratum connection in response to the second establishment request. The first network element performs security protection on communication between the first network element and the terminal device based on the first security context.

With reference to the fourth aspect, in some implementations of the fourth aspect, that the first network element obtains the first security context in response to the second establishment request includes: The first network element generates the first security context based on a first non-access stratum type to which the first non-access stratum connection belongs, where the first non-access stratum type represents that the first non-access stratum connection is a connection between the terminal device and a network element of a first network element type, and a type of the first network element is the first network element type; or the first network element receives the first security context from a security network element.

With reference to the fourth aspect, in some implementations of the fourth aspect, the method further includes: The first network element sends a third correspondence to a repository function network element, where the third correspondence includes a correspondence between a temporary identifier and a global identifier of the terminal device.

With reference to the fourth aspect, in some implementations of the fourth aspect, the method further includes: The first network element receives a first request message from a second network element, where the first request message is used to request the first network element to provide a second security context and/or a primary security context used to generate the second security context, and the second security context is used to establish a second non-access stratum connection between the terminal device and the second network element. The first network element sends the second security context and/or the primary security context to the second network element.

With reference to the fourth aspect, in some implementations of the fourth aspect, the method further includes: The first network element allocates a second identifier to the second network element, where the second identifier identifies the second network element. The first network element sends the second identifier to the terminal device.

According to a fifth aspect, a communication method is provided. The method may be performed by a terminal device, or may be performed by a component (for example, a chip or a circuit) of the terminal device. This is not limited. For ease of description, the following uses an example in which the method is performed by the terminal device for description.

The communication method includes: The terminal device receives a fifth message from a first network element through a first access network device, where the fifth message is used to activate security protection for a non-access stratum connection between the terminal device and a core network element. The terminal device generates a first security context corresponding to the first non-access stratum connection and a second security context corresponding to a second non-access stratum connection in response to the fifth message. The terminal device sends, to a second network element through a second access network device, a first establishment request security-protected based on the second security context, where the first establishment request is used to request to establish the second non-access stratum connection between the terminal device and the second network element. The first access network device and the second access network device are a same device or different devices.

Based on the foregoing solution, after receiving the fifth message from the first network element for activating security protection for the non-access stratum connection between the terminal device and the core network element, the terminal device generates different security contexts for different non-access stratum types, where the generated different security contexts include the second security context required for establishing the second non-access stratum connection. Therefore, when initiating the first establishment request for establishing the second non-access stratum connection, the terminal device may directly perform security protection may on the first establishment request by using the second security context. In this solution, the terminal device may generate different security contexts at a time, thereby simplifying implementation of the terminal device. In addition, it should be noted that the fifth message in the technical solution may be understood as triggering establishment of the non-access stratum connection between the terminal device and the core network element, including but not limited to triggering establishment of a non-access stratum connection between the terminal device and the first network element and establishment of a non-access stratum connection between the terminal device and the second network element.

With reference to the fifth aspect, in some implementations of the fifth aspect, the terminal device determines that a non-access stratum type to which the first non-access stratum connection belongs is a first non-access stratum type, and determines that a non-access stratum type to which the second non-access stratum connection belongs is a second non-access stratum type. The first non-access stratum type represents that the first non-access stratum connection is a connection between the terminal device and a network element of a first network element type, and a type of the first network element is the first network element type. The second non-access stratum type represents that the second non-access stratum connection is a connection between the terminal device and a network element of a second network element type, and a type of the second network element is the second network element type.

That the terminal device generates the first security context corresponding to the first non-access stratum connection and the second security context corresponding to the second non-access stratum connection in response to the fifth message includes: The terminal device generates the first security context corresponding to the first non-access stratum connection based on the first non-access stratum type, and generates the second security context corresponding to the second non-access stratum connection based on the second non-access stratum type. The first security context is used to perform security protection on communication between the terminal device and the first network element, and the second security context is used to perform security protection on communication between the terminal device and the second network element.

Based on the foregoing solution, in a process of generating a security context, the terminal device considers a non-access stratum type to which a non-access stratum connection belongs, so that different security contexts can be generated for non-access stratum connections of different non-access stratum types. Use of a plurality of security contexts can enhance flexibility and security of establishing a non-access stratum security connection.

With reference to the fifth aspect, in some implementations of the fifth aspect, the method further includes: The terminal device receives a second message from the second network element, where the second message is used to activate security protection for the second non-access stratum connection. The terminal device determines the second non-access stratum type to which the second non-access stratum connection belongs, and determines the second security context based on the second non-access stratum type. The terminal device performs security verification on the second message based on the second security context.

Based on the foregoing solution, when the terminal device generates different security contexts at a time, in a process of establishing the second non-access stratum connection between the terminal device and the second network element, after receiving the second message of the second network element for activating security protection for the second non-access stratum connection, the terminal device may determine the first security context corresponding to the second non-access stratum connection based on the second non-access stratum type to which the second non-access stratum connection belongs, and decrypt the received second message based on the first security context, without a need of repeatedly generating the security context corresponding to the second non-access stratum connection, thereby simplifying an implementation process of the terminal device.

With reference to the fifth aspect, in some implementations of the fifth aspect, that the terminal device performs security verification on the second message based on the first security context includes: The terminal device performs decryption and/or integrity verification on the second message based on the first security context.

With reference to the fifth aspect, in some implementations of the fifth aspect, the second message includes second indication information indicating that the non-access stratum type to which the second non-access stratum connection belongs is the second non-access stratum type, where the second non-access stratum type represents that the second non-access stratum connection is a connection between the terminal device and the network element of the second network element type, and the type of the second network element is the second network element type.

With reference to the fifth aspect, in some implementations of the fifth aspect, the second message further includes a first identifier, and the first identifier is used to determine the second network element. The method further includes: The terminal device receives a second identifier from the first network element through the first non-access stratum connection, where the second identifier is an identifier that is determined by the first network element and that identifies the second network element. The terminal device determines, based on the first identifier and the second identifier, whether the second network element is an authorized network element.

Based on the foregoing solution, the terminal device may determine, based on the first identifier received from the second network element and the second identifier received from the first network element, whether the second network element is an authorized network element, to prevent another unauthorized network element from establishing a non-access stratum connection to the terminal device, thereby enhancing security.

With reference to the fifth aspect, in some implementations of the fifth aspect, that the terminal device sends, to the second network element through the second access network device, the first establishment request security-protected based on the second security context includes: The terminal device sends a sixth message to the access network device, where the sixth message includes a first parameter and the first establishment request security-protected based on the second security context, and the first parameter is used by the access network device to determine the second network element type to which the second network element belongs.

Based on the foregoing solution, the terminal device may include the first parameter in the sixth message, so that the access network device can determine an identifier of the second network element based on the first parameter, and learn of an object to which a security connection establishment request for establishing a non-access stratum connection should be forwarded.

With reference to the fifth aspect, in some implementations of the fifth aspect, the first parameter includes service information that can be processed by the network element of the second network element type and/or type information indicating that the non-access stratum type of the second non-access stratum connection is the second non-access stratum type; and the second non-access stratum type represents that the second non-access stratum connection is a connection between the terminal device and the network element of the second network element type.

With reference to the fifth aspect, in some implementations of the fifth aspect, the sixth message further includes fourth indication information, and the fourth indication information indicates that the second non-access stratum connection is an N^{th} non-access stratum connection, where N is an integer greater than 1.

With reference to the fifth aspect, in some implementations of the fifth aspect, before the terminal device receives the fifth message from the first network element through the first access network device, the method further includes: The terminal device sends a second establishment request to the first network element through the first access network device, where the second establishment request is used to request to establish the first non-access stratum connection between the terminal device and the first network element.

With reference to the fifth aspect, in some implementations of the fifth aspect, that the terminal device sends the second establishment request to the first network element through the first access network device includes: The terminal device sends a fourth message to the first access network device, where the fourth message includes the second establishment request and a second parameter, and the second parameter is used by the access network device to determine the first network element type to which the first network element belongs.

With reference to the fifth aspect, in some implementations of the fifth aspect, the second parameter includes service information that can be processed by the network element of the first network element type and/or type information indicating that the non-access stratum type of the first non-access stratum connection is the first non-access stratum type; and the first non-access stratum type represents that the first non-access stratum connection is a connection between the terminal device and the network element of the first network element type.

With reference to the fifth aspect, in some implementations of the fifth aspect, the first establishment request security-protected based on the second security context includes: a first establishment request encrypted and/or integrity-protected based on the second security context.

According to a sixth aspect, a communication method is provided. The method may be performed by an access network device, or may be performed by a chip or a circuit disposed in the access network device. This is not limited in this application. For convenience, the following uses an example in which the method is performed by the access network device for description.

The communication method includes: The access network device receives a sixth message from a terminal device, where the sixth message includes a first parameter and a first establishment request security-protected based on a second security context, and the first establishment request is used to request to establish a second non-access stratum connection between the terminal device and a first core network element. The access network device determines a second network element type based on the first parameter, where the second network element type represents a type of the first core network element. The access network device determines an identifier of a second network element based on the second network element type. The access network device sends, to the second network element, the first establishment request security-protected based on a first security context.

With reference to the sixth aspect, in some implementations of the sixth aspect, the first parameter includes service information that can be processed by a network element of the second network element type and/or type information indicating that a non-access stratum type of the second non-access stratum connection is a second non-access stratum type; and the second non-access stratum type represents that the second non-access stratum connection is a connection between the terminal device and the network element of the second network element type.

With reference to the sixth aspect, in some implementations of the sixth aspect, the sixth message further includes fourth indication information, and the fourth indication information indicates that the second non-access stratum connection is an N^{th} non-access stratum connection, where N is an integer greater than 1.

With reference to the sixth aspect, in some implementations of the sixth aspect, the method further includes: The access network device receives a fourth message from the terminal device, where the fourth message includes a second establishment request and a second parameter, and the second establishment request is used to request to establish a first non-access stratum connection between the terminal device and a second core network element. The access network device determines a first network element type based on the second parameter, where the first network element type represents a type of the second core network element. The access network device determines an identifier of a first network element based on the first network element type. The access network device sends the second establishment request to the first network element.

With reference to the sixth aspect, in some implementations of the sixth aspect, the second parameter includes service information that can be processed by a network element of the first network element type and/or type information indicating that a non-access stratum type of the first non-access stratum connection is a first non-access stratum type; and the first non-access stratum type represents that the first non-access stratum connection is a connection between the terminal device and the network element of the first network element type.

With reference to the sixth aspect, in some implementations of the sixth aspect, the first establishment request security-protected based on the second security context includes: a first establishment request encrypted and/or integrity-protected based on the second security context.

For technical effects of the method shown in the sixth aspect and the possible designs of the sixth aspect, refer to the technical effects in the fifth aspect and the possible designs of the fifth aspect.

According to a seventh aspect, a communication method is provided. The method may be performed by a second network element, or may be performed by a chip or a circuit disposed in the second network element. This is not limited in this application. For convenience, the following uses an example in which the method is performed by the second network element for description.

The communication method includes: The second network element receives a first establishment request security-protected based on a second security context, where the first establishment request is used to request to establish a second non-access stratum connection between a terminal device and the second network element, and the second security context is used to perform security protection on communication between the terminal device and the second network element. The second network element obtains the second security context corresponding to the second non-access stratum connection in response to the first establishment request, where the second security context is used to perform security protection on communication between the terminal device and the second network element.

With reference to the seventh aspect, in some implementations of the seventh aspect, that the second network element obtains the second security context corresponding to the second non-access stratum connection in response to the first establishment request includes: The second network element receives the second security context; or the second network element generates the second security context.

With reference to the seventh aspect, in some implementations of the seventh aspect, the method further includes: The second network element sends a second message to the terminal device, where the second message is used to activate security protection for the second non-access stratum connection.

With reference to the seventh aspect, in some implementations of the seventh aspect, the second message includes second indication information indicating that a non-access stratum type to which the second non-access stratum connection belongs is a second non-access stratum type, where the second non-access stratum type represents that the second non-access stratum connection is a connection between the terminal device and a network element of a second network element type, and a type of the second network element is the second network element type.

With reference to the seventh aspect, in some implementations of the seventh aspect, the first establishment request security-protected based on the first security context includes: a first establishment request encrypted and/or integrity-protected based on the first security context.

For technical effects of the method shown in the seventh aspect and the possible designs of the seventh aspect, refer to the technical effects in the fifth aspect and the possible designs of the fifth aspect.

According to an eighth aspect, a communication method is provided. The method may be performed by a security network element, or may be performed by a component (for example, a chip or a circuit) of the security network element. This is not limited. For ease of description, the following uses an example in which the method is performed by the security network element for description.

The communication method includes: The security network element obtains a non-access stratum primary security context corresponding to a terminal device. The security network element sends a first correspondence to a repository function network element, where the first correspondence includes a correspondence between a global identifier of the terminal device and an identifier of the security network element.

Based on the foregoing solution, as a termination point for establishing a non-access stratum connection, the security network element may perform authentication with the terminal device to generate the primary security context, and store the correspondence between the global identifier of the terminal device and the identifier of the security network element in the repository function network element. Therefore, during security connection establishment, a core network element determines the security network element based on the global identifier of the terminal device, and obtains, from the security network element, the primary security context used to generate a security context, to implement security connection establishment.

With reference to the eighth aspect, in some implementations of the eighth aspect, the method further includes: The security network element receives a second establishment request from a first network element, where the second establishment request is used to request to establish a first non-access stratum connection between the terminal device and the first network element. The security network element generates a first security context based on a non-access stratum type to which the first non-access stratum connection belongs and the non-access stratum primary security context. The security network element sends the first security context to the first network element.

With reference to the eighth aspect, in some implementations of the eighth aspect, the method further includes: The security network element receives a second correspondence from the first network element, where the second correspondence includes a correspondence between the global identifier of the terminal device and security capability information of the terminal device. The security network element receives a third request message from a second network element for requesting to provide a second security context, where the second security context is used to establish a second non-access stratum connection between the terminal device and the second network element, and the third request message includes the global identifier of the terminal device. The security network element determines the security capability information of the terminal device based on the global identifier of the terminal device and the second correspondence. The security network element generates the second security context based on the security capability information of the terminal device and a non-access stratum type to which the second non-access stratum connection belongs. The security network element sends the second security context to the second network element.

According to a ninth aspect, a communication apparatus is provided, to implement the method according to the first aspect. The apparatus includes:
a transceiver module, configured to receive a first message from a first network element through a first access network device, where the first message is used to activate security protection for a first non-access stratum connection between the communication apparatus and the first network element; and a processing module, configured to generate a first security context corresponding to the first non-access stratum connection in response to the first message. The transceiver module is further configured to send, to a second network element through a second access network device, a first establishment request security-protected based on the first security context, where the first establishment request is used to request to establish a second non-access stratum connection between the communication apparatus and the second network element. The first access network device and the second access network device are a same device or different devices.

With reference to the ninth aspect, in some implementations of the ninth aspect, the processing module is further configured to determine that a non-access stratum type to which the first non-access stratum connection belongs is a first non-access stratum type. The first non-access stratum type represents that the first non-access stratum connection is a connection between the terminal device and a network element of a first network element type, and a type of the first network element is the first network element type. That the processing module generates the first security context in response to the first message includes: The processing module generates the first security context corresponding to the first non-access stratum connection based on the first non-access stratum type, where the first security context is used to perform security protection on communication between the terminal device and the first network element.

With reference to the ninth aspect, in some implementations of the ninth aspect, the first message includes first indication information indicating that the non-access stratum type to which the first non-access stratum connection belongs is the first non-access stratum type. That the processing module determines that the non-access stratum type to which the first non-access stratum connection belongs is the first non-access stratum type includes: The processing module determines, based on the first indication information, that the non-access stratum type to which the first non-access stratum connection belongs is the first non-access stratum type.

With reference to the ninth aspect, in some implementations of the ninth aspect, the transceiver module is further configured to receive a second message from the second network element, where the second message is used to activate security protection for the second non-access stratum connection; the processing module generates a second security context corresponding to the second non-access stratum connection in response to the second message; and the transceiver module is further configured to perform security protection on communication between the communication apparatus and the second network element based on the second security context.

With reference to the ninth aspect, in some implementations of the ninth aspect, the second message includes second indication information indicating that a non-access stratum type to which the second non-access stratum connection belongs is a second non-access stratum type, where the second non-access stratum type represents that the second non-access stratum connection is a connection between the communication apparatus device and a network element of a second network element type, and a type of the second network element is the second network element type.

With reference to the ninth aspect, in some implementations of the ninth aspect, the second message further includes a first identifier, and the first identifier is used to determine the second network element. The transceiver module is further configured to receive a second identifier from the first network element through the first non-access stratum connection, where the second identifier is an identifier that is determined by the first network element and that identifies the second network element. The processing module is further configured to determine, based on the first identifier and the second identifier, whether the second network element is an authorized network element.

With reference to the ninth aspect, in some implementations of the ninth aspect, that the transceiver module sends, to the second network element through the second access network device, the first establishment request security-protected based on the first security context includes: The transceiver module sends a third message to the access network device, where the third message includes a first parameter and the first establishment request security-protected based on the first security context, and the first parameter is used by the access network device to determine the second network element type to which the second network element belongs.

With reference to the ninth aspect, in some implementations of the ninth aspect, the first parameter includes service information that can be processed by the network element of the second network element type and/or type information indicating that the non-access stratum type of the second non-access stratum connection is the second non-access stratum type; and the second non-access stratum type represents that the second non-access stratum connection is a connection between the terminal device and the network element of the second network element type.

With reference to the ninth aspect, in some implementations of the ninth aspect, the third message further includes third indication information, and the third indication information indicates that the second non-access stratum connection is an N^{th} non-access stratum connection, where N is an integer greater than 1.

With reference to the ninth aspect, in some implementations of the ninth aspect, before the transceiver module receives the first message from the first network element, the transceiver module sends a second establishment request to the first network element through the first access network device, where the second establishment request is used to request to establish the first non-access stratum connection between the communication apparatus and the first network element.

With reference to the ninth aspect, in some implementations of the ninth aspect, that the transceiver module sends the second establishment request to the second network element through the first access network device includes: The transceiver module sends a fourth message to the access network device, where the fourth message includes the second establishment request and a second parameter, and the second parameter is used by the access network device to determine the first network element type to which the first network element belongs.

With reference to the ninth aspect, in some implementations of the ninth aspect, the second parameter includes service information that can be processed by the network element of the first network element type and/or type information indicating that the non-access stratum type of the first non-access stratum connection is the first non-access stratum type; and the first non-access stratum type represents that the first non-access stratum connection is a connection between the terminal device and the network element of the first network element type.

With reference to the ninth aspect, in some implementations of the ninth aspect, the first establishment request security-protected based on the first security context includes: a first establishment request encrypted and/or integrity-protected based on the first security context.

For technical effects of the communication apparatus shown in the ninth aspect and the possible designs of the ninth aspect, refer to the technical effects in the first aspect and the possible designs of the first aspect.

According to a tenth aspect, a communication apparatus is provided, to implement the method according to the second aspect. The apparatus includes: a transceiver module, configured to receive a third message from a terminal device, where the third message includes a first parameter and a first establishment request security-protected based on a first security context, and the first establishment request is used to request to establish a second non-access stratum connection between the terminal device and a first core network element; and a processing module, configured to determine a second network element type based on the first parameter, where the second network element type represents a type of the first core network element. The processing module is further configured to determine an identifier of a second network element based on the second network element type. The transceiver module is further configured to send, to the second network element, the first establishment request security-protected based on the first security context.

With reference to the tenth aspect, in some implementations of the tenth aspect, the first parameter includes service information that can be processed by a network element of the second network element type and/or type information indicating that a non-access stratum type of the second non-access stratum connection is a second non-access stratum type; and the second non-access stratum type represents that the second non-access stratum connection is a connection between the terminal device and the network element of the second network element type.

With reference to the tenth aspect, in some implementations of the tenth aspect, the third message further includes third indication information, and the third indication information indicates that the second non-access stratum connection is an N^{th} non-access stratum connection, where N is an integer greater than 1.

With reference to the tenth aspect, in some implementations of the tenth aspect, the transceiver module is further configured to receive a fourth message from the terminal device, where the fourth message includes a second establishment request and a second parameter, and the second establishment request is used to request to establish a first non-access stratum connection between the terminal device and a second core network element; the processing module determines a first network element type based on the second parameter, where the first network element type represents a type of the second core network element; the processing module determines an identifier of a first network element based on the first network element type; and the transceiver module is further configured to send the second establishment request to the first network element.

With reference to the tenth aspect, in some implementations of the tenth aspect, the second parameter includes service information that can be processed by a network element of the first network element type and/or type information indicating that a non-access stratum type of the first non-access stratum connection is a first non-access stratum type; and the first non-access stratum type represents that the first non-access stratum connection is a connection between the terminal device and the network element of the first network element type.

With reference to the tenth aspect, in some implementations of the tenth aspect, the first establishment request security-protected based on the first security context includes: a first establishment request encrypted and/or integrity-protected based on the first security context.

For technical effects of the communication apparatus shown in the tenth aspect and the possible designs of the tenth aspect, refer to the technical effects in the second aspect and the possible designs of the second aspect.

According to an eleventh aspect, a communication apparatus is provided, to implement the method according to the third aspect. The apparatus includes: a transceiver module, configured to receive a first establishment request security-protected based on a first security context, where the first establishment request is used to request to establish a second non-access stratum connection between a terminal device and the communication apparatus, and the first security context is used to perform security protection on communication between the terminal device and a first network element; and a processing module, configured to obtain a second security context corresponding to the second non-access stratum connection in response to the first establishment request, where the second security context is used to perform security protection on communication between the terminal device and the communication apparatus.

With reference to the eleventh aspect, in some implementations of the eleventh aspect, that the processing module obtains the second security context corresponding to the second non-access stratum connection in response to the first establishment request includes: The transceiver module receives the second security context; or the processing module generates the second security context based on a second non-access stratum type to which the second non-access stratum connection belongs.

With reference to the eleventh aspect, in some implementations of the eleventh aspect, the transceiver module sends a second message to the terminal device, where the second message is used to activate security protection for the second non-access stratum connection.

With reference to the eleventh aspect, in some implementations of the eleventh aspect, the second message includes second indication information indicating that a non-access stratum type to which the second non-access stratum connection belongs is the second non-access stratum type, where the second non-access stratum type represents that the second non-access stratum connection is a connection between the terminal device and a network element of a second network element type, and a type of the second network element is the second network element type.

With reference to the eleventh aspect, in some implementations of the eleventh aspect, the first establishment request security-protected based on the first security context includes: a first establishment request encrypted based on the first security context.

For technical effects of the communication apparatus shown in the eleventh aspect and the possible designs of the eleventh aspect, refer to the technical effects in the third aspect and the possible designs of the third aspect.

According to a twelfth aspect, a communication apparatus is provided, to implement the method according to the fourth aspect. The apparatus includes: a transceiver module, configured to receive a second establishment request, where the second establishment request is used to request to establish a first non-access stratum connection between a terminal device and the first network element; and a processing module, configured to obtain a first security context corresponding to the first non-access stratum connection in response to the second establishment request. The transceiver module is configured to perform security protection on communication between the communication apparatus and the terminal device based on the first security context.

With reference to the twelfth aspect, in some implementations of the twelfth aspect, that the processing module obtains the first security context in response to the second establishment request includes: The processing module generates the first security context based on a first non-access stratum type to which the first non-access stratum connection belongs, where the first non-access stratum type represents that the first non-access stratum connection is a connection between the terminal device and a network element of a first network element type, and a type of the first network element is the first network element type; or the transceiver module receives the first security context from a security network element.

With reference to the twelfth aspect, in some implementations of the twelfth aspect, the transceiver module sends a third correspondence to a repository function network element, where the third correspondence includes a correspondence between a temporary identifier and a global identifier of the terminal device.

With reference to the twelfth aspect, in some implementations of the twelfth aspect, the transceiver module receives a first request message from a second network element, where the first request message is used to request the communication apparatus to provide a second security context and/or a primary security context used to generate the second security context, and the second security context is used to establish a second non-access stratum connection between the terminal device and the second network element; and the transceiver module sends the second security context and/or the primary security context to the second network element.

With reference to the twelfth aspect, in some implementations of the twelfth aspect, the processing module allocates a second identifier to the second network element, where the second identifier identifies the second network element; and the transceiver module sends the second identifier to the terminal device.

For technical effects of the communication apparatus shown in the twelfth aspect and the possible designs of the twelfth aspect, refer to the technical effects in the fourth aspect and the possible designs of the fourth aspect.

According to a thirteenth aspect, a communication apparatus is provided, to implement the method according to the fifth aspect. The apparatus includes:
a transceiver module, configured to receive a first message from a first network element through a first access network device, where the first message is used to activate security protection for a first non-access stratum connection between the communication apparatus and the first network element; and a processing module, configured to generate a first security context corresponding to the first non-access stratum connection and a second security context corresponding to a second non-access stratum connection in response to the first message. The transceiver module is further configured to send, to a second network element through a second access network device, a first establishment request security-protected based on the second security context, where the first establishment request is used to request to establish the second non-access stratum connection between the communication apparatus and the second network element. The first access network device and the second access network device are a same device or different devices.

With reference to the thirteenth aspect, in some implementations of the thirteenth aspect, the processing module is further configured to: determine that a non-access stratum type to which the first non-access stratum connection belongs is a first non-access stratum type, and determine that a non-access stratum type to which the second non-access stratum connection belongs is a second non-access stratum type. The first non-access stratum type represents that the first non-access stratum connection is a connection between the terminal device and a network element of a first network element type, and a type of the first network element is the first network element type. The second non-access stratum type represents that the second non-access stratum connection is a connection between the terminal device and a network element of a second network element type, and a type of the second network element is the second network element type. That the processing module generates the first security context corresponding to the first non-access stratum connection and the second security context corresponding to the second non-access stratum connection in response to the first message includes: The processing module generates the first security context corresponding to the first non-access stratum connection based on the first non-access stratum type, and generates the second security context corresponding to the second non-access stratum connection based on the second non-access stratum type. The first security context is used to perform security protection on communication between the terminal device and the first network element, and the second security context is used to perform security protection on communication between the terminal device and the second network element.

With reference to the thirteenth aspect, in some implementations of the thirteenth aspect, the first message includes first indication information indicating that the non-access stratum type to which the first non-access stratum connection belongs is the first non-access stratum type. That the processing module determines that the non-access stratum type to which the first non-access stratum connection belongs is the first non-access stratum type includes: The processing module determines, based on the first indication information, that the non-access stratum type to which the first non-access stratum connection belongs is the first non-access stratum type.

With reference to the thirteenth aspect, in some implementations of the thirteenth aspect, the transceiver module is further configured to receive a second message from the second network element, where the second message is used to activate security protection for the second non-access stratum connection; the processing module determines the second non-access stratum type to which the second non-access stratum connection belongs, and determines the second security context based on the second non-access stratum type; and the processing module is further configured to perform security verification on the second message based on the first security context.

With reference to the thirteenth aspect, in some implementations of the thirteenth aspect, that the processing module performs security verification on the second message based on the first security context includes: The processing module performs decryption and/or integrity verification on the second message based on the first security context.

With reference to the thirteenth aspect, in some implementations of the thirteenth aspect, the second message includes second indication information indicating that the non-access stratum type to which the second non-access stratum connection belongs is the second non-access stratum type, where the second non-access stratum type represents that the second non-access stratum connection is the connection between the communication apparatus and the network element of the second network element type, and the type of the second network element is the second network element type.

With reference to the thirteenth aspect, in some implementations of the thirteenth aspect, the second message further includes a first identifier, and the first identifier is used to determine the second network element. The transceiver module is further configured to receive a second identifier from the first network element through the first non-access stratum connection, where the second identifier is an identifier that is determined by the first network element and that identifies the second network element. The processing module is further configured to determine, based on the first identifier and the second identifier, whether the second network element is an authorized network element.

With reference to the thirteenth aspect, in some implementations of the thirteenth aspect, that the transceiver module sends, to the second network element through the second access network device, the first establishment request security-protected based on the second security context includes: The transceiver module sends a sixth message to the access network device, where the sixth message includes a first parameter and the first establishment request security-protected based on the second security context, and the first parameter is used by the access network device to determine the second network element type to which the second network element belongs.

With reference to the thirteenth aspect, in some implementations of the thirteenth aspect, the first parameter includes service information that can be processed by the network element of the second network element type and/or type information indicating that the non-access stratum type of the second non-access stratum connection is the second non-access stratum type; and the second non-access stratum type represents that the second non-access stratum connection is a connection between the terminal device and the network element of the second network element type.

With reference to the thirteenth aspect, in some implementations of the thirteenth aspect, the sixth message further includes fourth indication information, and the fourth indication information indicates that the second non-access stratum connection is an N^{th} non-access stratum connection, where N is an integer greater than 1.

With reference to the thirteenth aspect, in some implementations of the thirteenth aspect, before the transceiver module receives the first message from the first network element, the transceiver module sends a second establishment request to the first network element through the first access network device, where the second establishment request is used to request to establish the first non-access stratum connection between the communication apparatus and the first network element.

With reference to the thirteenth aspect, in some implementations of the thirteenth aspect, that the transceiver module sends the second establishment request to the second network element through the first access network device includes: The transceiver module sends a fourth message to the access network device, where the fourth message includes the second establishment request and a second parameter, and the second parameter is used by the access network device to determine the first network element type to which the first network element belongs.

With reference to the thirteenth aspect, in some implementations of the thirteenth aspect, the second parameter includes service information that can be processed by the network element of the first network element type and/or type information indicating that the non-access stratum type of the first non-access stratum connection is the first non-access stratum type; and the first non-access stratum type represents that the first non-access stratum connection is a connection between the terminal device and the network element of the first network element type.

With reference to the thirteenth aspect, in some implementations of the thirteenth aspect, the first establishment request security-protected based on the first security context includes: a first establishment request encrypted and/or integrity-protected based on the first security context.

For technical effects of the communication apparatus shown in the thirteenth aspect and the possible designs of the thirteenth aspect, refer to the technical effects in the fifth aspect and the possible designs of the fifth aspect.

According to a fourteenth aspect, a communication apparatus is provided, to implement the method according to the sixth aspect. The apparatus includes: a transceiver module, configured to receive a sixth message from a terminal device, where the sixth message includes a first parameter and a first establishment request security-protected based on a second security context, and the first establishment request is used to request to establish a second non-access stratum connection between the terminal device and a first core network element; and a processing module, configured to determine a second network element type based on the first parameter, where the second network element type represents a type of the first core network element. The processing module is further configured to determine an identifier of a second network element based on the second network element type. The transceiver module is further configured to send, to the second network element, the first establishment request security-protected based on a first security context.

With reference to the fourteenth aspect, in some implementations of the fourteenth aspect, the first parameter includes service information that can be processed by the network element of the second network element type and/or type information indicating that the non-access stratum type of the second non-access stratum connection is the second non-access stratum type; and the second non-access stratum type represents that the second non-access stratum connection is a connection between the terminal device and the network element of the second network element type.

With reference to the fourteenth aspect, in some implementations of the fourteenth aspect, the sixth message further includes fourth indication information, and the third indication information indicates that the second non-access stratum connection is an N^{th} non-access stratum connection, where N is an integer greater than 1.

With reference to the fourteenth aspect, in some implementations of the fourteenth aspect, the transceiver module is further configured to receive a fourth message from the terminal device, where the fourth message includes a second establishment request and a second parameter, and the second establishment request is used to request to establish a first non-access stratum connection between the terminal device and a second core network element; the processing module determines a first network element type based on the second parameter, where the first network element type represents a type of the second core network element; the processing module determines an identifier of a first network element based on the first network element type; and the transceiver module is further configured to send the second establishment request to the first network element.

With reference to the fourteenth aspect, in some implementations of the fourteenth aspect, the second parameter includes service information that can be processed by a network element of the first network element type and/or type information indicating that a non-access stratum type of the first non-access stratum connection is a first non-access stratum type; and the first non-access stratum type represents that the first non-access stratum connection is a connection between the terminal device and the network element of the first network element type.

With reference to the fourteenth aspect, in some implementations of the fourteenth aspect, the first establishment request security-protected based on the second security context includes: a first establishment request encrypted and/or integrity-protected based on the second security context.

For technical effects of the communication apparatus shown in the fourteenth aspect and the possible designs of the fourteenth aspect, refer to the technical effects in the sixth aspect and the possible designs of the sixth aspect.

According to a fifteenth aspect, a communication apparatus is provided, to implement the method according to the seventh aspect. The apparatus includes: a transceiver module, configured to receive a first establishment request security-protected based on a second security context, where the first establishment request is used to request to establish a second non-access stratum connection between a terminal device and the communication apparatus, and the second security context is used to perform security protection on communication between the terminal device and the communication apparatus; and a processing module, configured to obtain the second security context in response to the first establishment request.

With reference to the fifteenth aspect, in some implementations of the fifteenth aspect, that the processing module obtains the second security context in response to the first establishment request includes: The transceiver module receives the second security context; or the processing module generates the second security context based on a second non-access stratum type to which the second non-access stratum connection belongs.

With reference to the fifteenth aspect, in some implementations of the fifteenth aspect, the transceiver module sends a second message to the terminal device, where the second message is used to activate security protection for the second non-access stratum connection.

With reference to the fifteenth aspect, in some implementations of the fifteenth aspect, the second message includes second indication information indicating that a non-access stratum type to which the second non-access stratum connection belongs is a second non-access stratum type, where the second non-access stratum type represents that the second non-access stratum connection is a connection between the terminal device and a network element of a second network element type, and a type of the second network element is the second network element type.

With reference to the fifteenth aspect, in some implementations of the fifteenth aspect, the first establishment request security-protected based on the first security context includes: a first establishment request encrypted and/or integrity-protected based on the first security context.

For technical effects of the communication apparatus shown in the fifteenth aspect and the possible designs of the fifteenth aspect, refer to the technical effects in the seventh aspect and the possible designs of the seventh aspect.

According to a sixteenth aspect, a communication apparatus is provided, to implement the method according to the eighth aspect. The apparatus includes: a processing module, configured to obtain a non-access stratum primary security context corresponding to a terminal device; and a transceiver module, configured to send a first correspondence to a repository function network element, where the first correspondence includes a correspondence between a global identifier of the terminal device and an identifier of the communication apparatus.

With reference to the sixteenth aspect, in some implementations of the sixteenth aspect, the transceiver module receives a second establishment request from a first network element, where the second establishment request is used to request to establish a first non-access stratum connection between the terminal device and the first network element; the processing module generates a first security context based on a non-access stratum type to which the first non-access stratum connection belongs and the non-access stratum primary security context; and the transceiver module sends the first security context to the first network element.

With reference to the sixteenth aspect, in some implementations of the sixteenth aspect, the transceiver module receives a second correspondence from the first network element, where the second correspondence includes a correspondence between the global identifier of the terminal device and security capability information of the terminal device. The transceiver module receives a first request message from a second network element for requesting to provide a second security context, where the second security context is used to establish a second non-access stratum connection between the terminal device and the second network element, and the first request message includes the global identifier of the terminal device. The processing module determines the security capability information of the terminal device based on the global identifier of the terminal device and the second correspondence. The processing module generates the second security context based on the security capability information of the terminal device and a non-access stratum type to which the second non-access stratum connection belongs. The transceiver module sends the second security context to the second network element.

For technical effects of the communication apparatus shown in the sixteenth aspect and the possible designs of the sixteenth aspect, refer to the technical effects in the eighth aspect and the possible designs of the eighth aspect.

According to a seventeenth aspect, a communication system is provided, including a terminal device, an access network device, a first network element, and a second network element. The terminal device is configured to perform the method according to the first aspect. The access network device performs the method according to the second aspect. The second network element performs the method according to the third aspect. The first network element performs the method according to the fourth aspect.

According to an eighteenth aspect, a communication system is provided, including a terminal device, an access network device, a first network element, a second network element, and a security network element. The terminal device is configured to perform the method according to the fifth aspect. The access network device performs the method according to the sixth aspect. The second network element performs the method according to the seventh aspect. The first network element performs the method according to the fourth aspect. T the security network element performs the method according to the eighth aspect.

According to a nineteenth aspect, a communication apparatus is provided. The apparatus includes: a memory, configured to store a program; and a processor, configured to execute the program stored in the memory. When the program stored in the memory is executed, the processor is configured to perform the methods provided in the foregoing aspects.

According to a twentieth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a twenty-first aspect, a computer-readable storage medium is provided. The computer-readable storage medium stores program code executed by a device, and the program code is used to perform the methods provided in the foregoing aspects.

According to a twenty-second aspect, a computer program product including instructions is provided. When the computer program product runs on a computer, the computer is enabled to perform the methods provided in the foregoing aspects.

According to a twenty-third aspect, a chip is provided. The chip includes a processor and a communication interface, and the processor reads, through the communication interface, instructions stored in a memory, to perform the methods provided in the foregoing aspects.

Optionally, in an implementation, the chip may further include the memory. The memory stores the instructions. The processor is configured to execute the instructions stored in the memory. When the instructions are executed, the processor is configured to perform the methods provided in the foregoing aspects.

### BRIEF DESCRIPTION OF DRAWINGS

FIG. 1 is a diagram of a network architecture 100 according to this application;
FIG. 2 is a diagram of a control plane protocol stack between a terminal device and an SMF;
FIG. 3 is a diagram of a distributed NAS architecture;
FIG. 4 is a diagram of a NAS security establishment procedure;
FIG. 5 is a schematic flowchart of a communication method according to this application;
FIG. 6 is a schematic flowchart of another communication method according to this application;
FIG. 7 is a schematic flowchart of still another communication method according to this application;
FIG. 8 is a schematic flowchart of still another communication method according to this application;
FIG. 9 is a schematic flowchart of still another communication method according to this application;
FIG. 10A and FIG. 10B are a schematic flowchart of still another communication method according to this application;
FIG. 11 is a block diagram of a communication apparatus 10 according to an embodiment of this application.
FIG. 12 is a diagram of another communication apparatus 20 according to an embodiment of this application; and
FIG. 13 is a diagram of a chip system 30 according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is referred to as a 3GPP network for short. The 3GPP network usually includes but is not limited to a 5G network, a 4th generation (4th generation, 4G) mobile communication network, and another future communication system such as a 6th generation (6th generation, 6G) network.

For ease of description, the PLMN or the 5G network is used as an example for description in embodiments of this application.

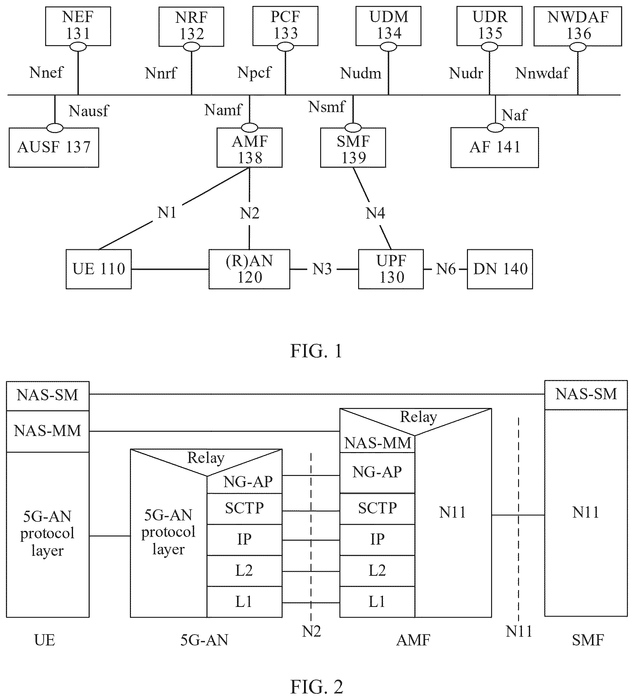

FIG. 1 is a diagram of a network architecture 100 according to this application. A 5G network architecture based on a service-based architecture SBA in a non-roaming scenario defined in a 3GPP standardization process is used as an example. As shown in the figure, the network architecture may include three parts: a terminal device part, a data network (data network, DN) part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having a wireless transceiver function, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor device, an outdoor device, a handheld device, or a vehicle-mounted device; or may be deployed on water (for example, on a ship); or may be deployed in the air (for example, on aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), or a wireless terminal in smart home (smart home). The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a sub-network of the operator network, and is an implementation system between a service node in the operator network and the terminal device 110. To access the operator network, the terminal device 110 first passes through the (R)AN 120, and then may be connected to the service node in the operator network through the (R)AN 120. The access network device (RAN device) in embodiments of this application is a device that provides a wireless communication function for the terminal device 110, and may also be referred to as a network device. The RAN device includes but is not limited to a next generation NodeB (next generation NodeB, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmitting point (transmitting point, TP), a small cell device (pico), a mobile switching center, a network device in a future network, or the like. In systems using different radio access technologies, devices having access network device functions may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The CN part may include but is not limited to the following NFs: a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may alternatively be deployed by the operator, that is, the DN belongs to a part of the PLMN, for example, an IP multimedia service (IP Multimedia Service, IMS) or an internet (Internet). Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, the terminal device 110 may be a sensor installed in a workshop of the smart factory, a control server of the sensor is deployed in the data network DN 140, and the control server may provide a service for the sensor. The sensor may communicate with the control server to obtain instructions of the control server, transmit collected sensor data to the control server according to the instructions, and the like. For another example, the data network DN 140 may be an internal office network of a company, the terminal device 110 may be a mobile phone or a computer of an employee of the company, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes NF functions included in the CN.
1. The UPF 130 is a gateway provided by the operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by the operator, and is mainly used to enable a third party to use a service provided by a network, support the network in opening a capability, an event, and data analysis of the network, convert security configuration information from an external application to the PLMN and exchange information inside and outside the PLMN, provide an API interface opened by the operator network, provide interaction between an external server and an internal operator network, and the like.
3. The NRF 132 is a control plane function provided by the operator, and may be configured to maintain real-time information of a network function and a service in a network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by the operator, and supports a unified policy framework to govern network behavior and provide subscription information related to a policy rule and policy decision for another control function.
5. The UDM 134 is a control plane function provided by the operator, and is responsible for storage of a subscription permanent identifier (subscription permanent identifier, SUPI) of a subscriber of the operator network, a generic public subscription identifier (generic public subscription identifier, GPSI) of the subscriber, a credential (credential), and other information. The SUPI is first encrypted in a transmission process, and an encrypted SUPI is referred to as a subscription concealed identifier (subscription concealed identifier, SUCI). The information stored in the UDM network function 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom or a user using a SIM card of China Mobile. The credential of the subscriber may be a long-term key stored in the SIM card, or a stored small file, for example, information related to encryption of the SIM card, and is used for authentication and/or authorization. It should be noted that, for ease of description, the permanent identifier, the credential, a security context, authentication data (cookie), a token, and other information related to verification/authentication and authorization are not limited or distinguished in embodiments of this application. For a transmitting end, the security context may be understood as information (for example, a key) required for message encryption and/or integrity protection. For a receiving end, the security context may be understood as information required for message decryption and/or integrity verification.
6. The UDR 135 is a control plane function provided by the operator, and provides a function of storing and obtaining subscription data for the UDM, provides a function of storing and obtaining policy data for the PCF, stores and obtains NF group ID (group ID) information of a user, and the like.
7. The NWDAF 136 is a control plane function provided by the operator, and a main function of the NWDAF 136 is to collect data from an NF, an external application function AF, an operations, administration and maintenance (operations, administration and maintenance, OAM) system, and the like, and provide the NF and the AF with NWDAF service registration, data exposure, data analysis, and the like. In this application, the NWDAF is mainly responsible for security-related data analysis. Therefore, in this application, the NWDAF may also be understood as a network element having a security analysis function. That the network element having a security analysis function is referred to as the NWDAF is only an example, and there may be another network element name subsequently. This is not limited in this application.
8. The AUSF 137 is a control plane function provided by the operator, and is usually used for primary authentication, namely, authentication between the terminal device 110 (the subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
   The AMF 138 is configured to establish a NAS connection to UE, and has a same 5G non-access stratum security context as the UE. The 5G non-access stratum security context includes KAMF, non-access stratum keys with same key identifier information, UE security capabilities, and uplink and downlink NAS COUNT values. The non-access stratum keys include a non-access stratum encryption key and a non-access stratum integrity protection key, which are respectively used for confidentiality protection and integrity protection of a non-access stratum message.
10. The SMF 139 is a control plane network function provided by the operator network, and is responsible for managing a PDU session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.
11. The AF 141 is a control plane network function provided by the operator network, is configured to provide application layer information, and may interact with a policy framework through a network exposure function network element, or directly interact with the policy framework to make a policy decision request. The AF 141 may be located inside or outside the operator network.

It may be understood that the foregoing network elements or functions may be physical entities in a hardware device, software instances running on dedicated hardware, or virtualized functions instantiated on a sharing platform (for example, a cloud platform). Briefly, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that names of interfaces between the network functions in the figure are merely examples. During specific implementation, the interface names of the system architecture may alternatively be other names. This is not limited in this application. In addition, names of messages (or signaling) transmitted between the foregoing network elements are also merely examples, and do not constitute any limitation on functions of the messages.

For ease of description, in embodiments of this application, network functions (such as the NEF 131, ..., and the SMF 139) are collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in the core network, for example, may be combined as required to form a network slice. These core network elements may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

For ease of understanding of embodiments of this application, some basic concepts in this application are briefly described. It should be understood that the basic concepts described below are described by using basic concepts specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another future system.
1. Non-access stratum message: The non-access stratum message is a message sent by a terminal device to a subsequent node through a radio access node, and includes a message sent by the terminal device to a core network through an access network device, or a message sent by the terminal device to a CU through a DU. Because the access node does not perform processing, the message is referred to as the non-access stratum message. In this application, for ease of description, a message that is not processed by the access node is referred to as a NAS (Non-Access Stratum) message. However, it should be understood that a name of the message is not limited in this application, and the message that is not processed by the access node may have another name (for example, another possible name defined in a future communication protocol).
2. NAS message classification: NAS messages can be classified into a mobility management (Mobility management, MM) NAS message, a session management (Session Management, SM) NAS message, a short message service (Short Message Service, SMS) NAS message, and a call control (Call Control, CC) NAS message based on core network elements that send NAS messages. Other types of NAS messages other than the MM NAS are first sent by UE to an AMF through an access network and then routed to another NF through the AMF.

In a protocol stack, RRC and radio access network application part (Radio Access Network Application Part, RANAP) layers or a protocol layer below the RRC and RANAP layers are referred to as an access stratum, and an MM, an SM, or a CC above the RRC and the RANAP is referred to as a non-access stratum. A procedure in which a base station of a radio access stratum needs to participate in processing is referred to as an access stratum procedure. A procedure in which only UE and a core network element need to process signaling and a base station of a radio access network only needs to route signaling but does not need to process signaling is referred to as a non-access stratum procedure.

For ease of understanding, how an AMF routes a session management NAS message (NAS-SM) is briefly described with reference to FIG. 2. FIG. 2 is a diagram of a control plane protocol stack between a terminal device and an SMF. As shown in FIG. 2, a NAS-SM protocol layer is an SM function of a NAS protocol, and supports establishment, modification, and release of a user plane of a PDU session. The NAS-SM protocol layer supports processing of session management between the UE and the SMF. NAS-SM signaling is transferred by the AMF, content of the NAS-SM signaling is not parsed by the AMF, and the NAS-SM signaling is processed (created and processed) at the NAS-SM protocol layer between the UE and the SMF.

A NAS-MM protocol layer processes the NAS-SM signaling in the following two aspects:
(1) Transmitting the NAS-SM signaling: The NAS MM protocol layer creates a NAS MM message, including a security header and an indication for transmitting the NAS SM signaling. After receiving the NAS MM, the NAS MM protocol layer learns of information about how to forward and where to forward the NAS SM signaling.
(2) Receiving the NAS-SM signaling: After the NAS MM message is received, a NAS MM part is processed, that is, integrity check is performed, and information about how to forward and where to forward the NAS SM signaling is parsed.

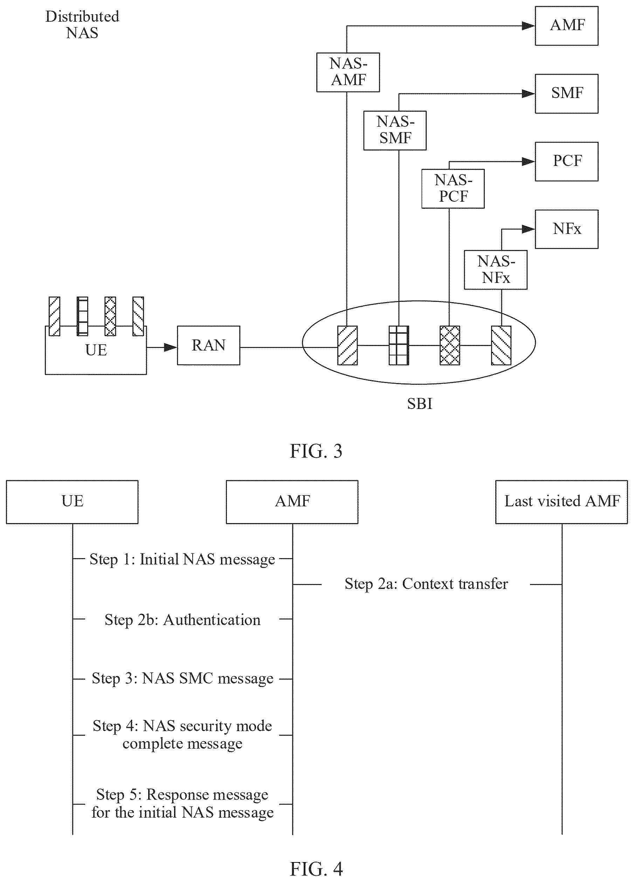

3. Distributed NAS architecture: For ease of understanding, the distributed NAS architecture is described with reference to FIG. 3. FIG. 3 is a diagram of the distributed NAS architecture.

The distributed NAS architecture and an N2 service-based interface (service-based interface, SBI) enable UE and any network element (UE-any NF) to directly communicate with each other. An AMF does not need to be used as a transmission channel, so that (R)AN-NFs directly communicate with each other. This may bring the following benefits:
(1) An (R)AN may directly communicate with an NF of a corresponding service.
(2) Signaling load distribution between a plurality of NFs reduces an AMF signaling load. For example, no NAS-SM message needs to be sent. A quantity of signaling hops is reduced, and a signaling delay is reduced.

4. NAS security establishment: For ease of understanding, a NAS security establishment procedure defined in an existing protocol is described with reference to FIG. 4. FIG. 4 is a diagram of the NAS security establishment procedure.

It can be learned from FIG. 4 that the NAS security establishment includes the following steps:
Step 1: UE sends an initial NAS message to an AMF.

For example, if the UE has no NAS security context, the initial NAS message should include only a plaintext information element (information element, IE), that is, a subscription identifier (for example, a subscription concealed identifier (subscription concealed identifier, SUCI) or a globally unique temporary identity (Globally Unique Temporary Identity, GUTI)), a UE security capability, or ngKSI.

For example, if the UE has a NAS security context, the sent initial NAS message should include the foregoing plaintext information element and a complete initial NAS message encrypted in an encrypted NAS container. If the initial NAS message is protected and the AMF has a same security context, steps 2 to 4 below may be omitted. In this case, the AMF needs to use the complete initial NAS message in the NAS container as a message to be responded to.

Step 2: If the AMF cannot obtain a NAS security context locally or from a last visited AMF (last visited AMF) of the UE, or if the AMF fails to perform integrity check on the received initial NAS message, the AMF initiates an authentication process with the UE (as shown in step 2b in FIG. 2). A specific authentication process is not limited in this application, and details are not described herein again.

For example, if the AMF obtains an old NAS security context from the last visited AMF of the UE (for example, step 2a shown in FIG. 2), the AMF may decipher the NAS container with the same security context, and obtain the initial NAS message. In this case, steps 2b to 4 may be omitted. If the AMF obtains new K_AMF (receives keyAmfChangeInd) from the last visited AMF, step 2b may be omitted.

Step 3: If UE authentication succeeds, the AMF sends a NAS security mode command message (NAS Security Mode Command message, NAS SMC).

If the initial NAS message is protected but does not pass integrity check (for example, due to a MAC failure or because the AMF cannot find a security context used), or the AMF cannot decrypt the complete initial NAS message in the NAS container (for example, due to reception of "keyAmfChangeInd" from the last visited AMF), the AMF includes, in the NAS security mode command message, a flag requesting the UE to send the complete initial NAS message in a NAS security mode complete message (NAS Security Mode Complete message).

Step 4: The UE sends the NAS security mode complete message to the AMF in response to the NAS security mode command message. The NAS security mode complete message needs to be encrypted and integrity-protected. In addition, if the AMF requests or the UE sends an unprotected initial NAS message, the NAS security mode complete message includes the complete initial NAS message in the NAS container. The AMF needs to use the complete initial NAS message in the NAS container as a message to be responded to.

Step 5: The AMF sends a response to the initial NAS message. This message needs to be encrypted and integrity-protected.

In addition, to facilitate understanding of embodiments of this application, the following several descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

Second, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "510" and "520" are merely identifiers for ease of description, and do not limit a sequence of performing steps.

Third, in this application, a word "example" or "for example" represents giving an example, an illustration, or a description. Any embodiment or design scheme described as "example" or "for example" in this application should not be explained as being more preferred or having more advantages than another embodiment or design scheme. Exactly, use of the word such as "example" or "for example" is intended to present a related concept in a specific manner.

Fourth, "store" in embodiments of this application may mean "stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, a "protocol" in embodiments of this application may refer to a standard protocol in the communication field, for example, may include an LTE protocol, an NR protocol, and a related protocol applied to a future communication system. This is not limited in this application.

Sixth, in embodiments of this application, "in a case of", "when", and "if' may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement same or similar functions in an existing or future protocol.

Eighth, a term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

With reference to FIG. 1, the foregoing briefly describes a scenario to which communication methods provided in embodiments of this application can be applied, describes basic concepts that may be used in embodiments of this application, and describes a concept of NAS security establishment in the basic concepts. However, the NAS security establishment does not adapt to a distributed NAS architecture because only an AMF can establish a NAS connection to UE. There is no extension to all core network elements. The NAS security establishment is not specific to the distributed NAS architecture, that is, all NAS messages are forwarded by the AMF. Therefore, a set of NAS security contexts (that is, security between the UE and the AMF) is shared.

This application provides a communication method, which may be applied to the distributed NAS architecture shown in FIG. 3 or another scenario in which NAS security protection needs to be established, and may provide security protection when a plurality of NAS connections are established. Specifically, security establishment procedures of a plurality of NASs (for example, N, where N is a positive integer greater than 1) are divided into security establishment of a 1^{st} NAS and security establishment of remaining N-1 NASs. Different NAS types (NAS type) may have different NAS security contexts. Compared with the NAS security establishment described in the preceding basic concepts, this greatly improves security.

It should be further understood that a specific structure of an execution body of the method provided in embodiments of this application is not specifically limited in the following embodiments, provided that communication can be performed according to the method provided in embodiments of this application by running a program that records code of the method provided in embodiments of this application. For example, the method provided in embodiments of this application may be performed by a network element, or a functional module that can invoke and execute a program in the network element.

For ease of description, in the following embodiments, establishment of two NAS connections (or referred to as NAS security connections) is mainly used as an example to describe how to establish a plurality of NAS connections. A NAS connection established between a terminal device and a first network element is referred to as a first NAS connection. A NAS connection established between the terminal device and a second network element is referred to as a second NAS connection. The terminal device initiates establishment of the second NAS connection by sending a first NAS security establishment request (that is, the foregoing first establishment request), and initiates establishment of the first NAS connection by sending a second NAS security establishment request (that is, the foregoing second establishment request). A first security context corresponding to the first NAS connection is a first NAS security context. A second security context corresponding to the second NAS connection is a second NAS security context. A NAS type to which the first NAS connection belongs is a first NAS type. A NAS type to which the second NAS connection belongs is a second NAS type.

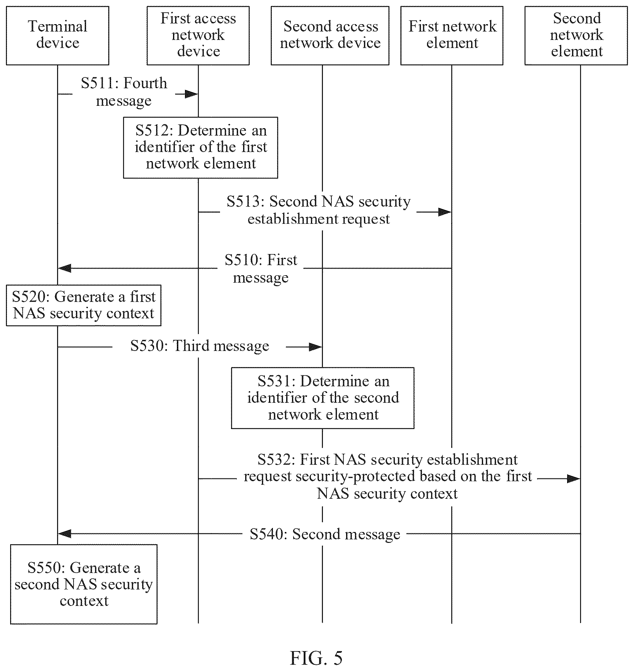

FIG. 5 is a schematic flowchart of a communication method according to this application. The method includes the following step:

S510: A terminal device receives a first message from a first network element through a first access network device, in other words, the first network element sends the first message to the terminal device through the first access network device.

Specifically, in a process of establishing a first NAS connection between the terminal device and the first network element, the first network element may trigger establishment of the first NAS connection by using the first message, in other words, the first network element may activate NAS security protection for the first NAS connection by using the first message.

For example, the first message is a NAS security mode command (NAS Security Mode Command) sent by the first network element to the terminal device through the first access network device.

For example, the first message includes a NAS identifier #1 and security capability description information of the terminal device. The NAS identifier #1 identifies that a network element that currently establishes a NAS connection to the terminal device is the first network element, so that the terminal device determines, based on the NAS identifier #1, that the network element that currently establishes a NAS connection is the first network element. For example, the NAS identifier #1 may be ngKSI. In addition, for the security capability description information, refer to a stipulation in an existing protocol. The security capability description information identifies a security capability of the terminal device.

For example, the first message includes first indication information indicating that a NAS type to which the first NAS connection belongs is a first NAS type. The first NAS type represents that the first NAS connection is a connection between the terminal device and a network element of a first network element type, and a type of the first network element is the first network element type. Therefore, in this embodiment, in a scenario in which the terminal device requests to establish a plurality of NAS connections, the terminal device may determine, based on the first indication information, a specific type of NAS connection that needs to be established.

For example, if the first indication information identifies that the NAS type to which the first NAS connection to be established belongs is MM-NAS, the terminal device determines, based on the first indication information, that an MM-NAS connection needs to be established.

It should be noted that the first indication information may be implemented in a plurality of manners, including but not limited to an information element carried in the first message or the first message.

For example, the first indication information is an information element carried in the first message. If the first network element is an AMF, the first indication information indicates that the first NAS type to which the first NAS connection belongs is an MM-NAS connection. For another example, the first indication information is an information element carried in the first message. If the first network element is an SMF, the first indication information indicates that the first NAS type to which the first NAS connection belongs is an SM-NAS connection. For another example, the first indication information is the first message. For example, a protocol predefines that a first message between the terminal device and the network element of the first network element type (for example, an AMF) is a message #A, and a first message between the terminal device and a network element of a second network element type (for example, an SMF) is a message #B. If the first message is the message #A, it indicates that the first NAS type to which the first NAS connection belongs is an MM-NAS connection. If the first message is the message #B, it indicates that the first NAS type to which the first NAS connection belongs is an SM-NAS connection.

Specifically, that the first indication information indicates the first NAS type to which the first NAS connection belongs may also be understood as that the first indication information indicates the network element type to which the first network element belongs. For example, if the first network element is an AMF, the first indication information indicates that the first network element is an MM-NAS network element. For another example, if the first network element is an SMF, the first indication information indicates that a first network element is an SM-NAS network element.

For ease of description, an example in which the first indication information indicates the first NAS type to which the first NAS connection belongs is used below for description.

It should be noted that, in this embodiment, before the terminal device receives the first message from the first network element, the terminal device sends a second NAS security establishment request to the first network element through the first access network device. The method procedure shown in FIG. 5 further includes the following step:

S511: The terminal device sends a fourth message to the first access network device, in other words, the first access network device receives the fourth message from the terminal device.

For example, the terminal device sends the fourth message to the first access network device, where the fourth message includes the second NAS security establishment request and a second parameter, and the second parameter is used by the first access network device to determine the first network element type to which the first network element belongs. Further, the first access network device may determine an identifier of the first network element based on the first network element type, and forward the second NAS security establishment request to the first network element. In this case, the method procedure shown in FIG. 5 further includes the following step:
S512: The first access network device determines the identifier of the first network element.

Specifically, that the first access network device determines the identifier of the first network element includes:
First, the first access network device determines, based on the second parameter, the first network element type to which the first network element belongs. Specifically, the first access network device determines, based on the second parameter, that the NAS type of the first NAS connection is the first NAS type, where the first NAS type represents that the first NAS connection is a connection between the terminal device and the network element of the first network element type. Therefore, it may be understood that the first access network device determines, based on the second parameter, the first network element type to which the first network element belongs.

For example, the second parameter includes service information that can be processed by the network element of the first network element type and/or type information indicating the first NAS type to which the first NAS connection belongs.

In a possible implementation, the second parameter includes service information that can be processed by the network element of the first network element type (that is, information that can be identified by the network element of the first network element type).

For example, when the second parameter includes a mobility parameter (for example, a cell ID or location area code (location area code, LAC) data), the first access network device may determine, based on the second parameter, that the first network element type to which the first network element belongs is an access management (MM) network element.

For another example, when the second parameter includes a domain network name (Domain Network Name, DNN) and/or a PDU session (PDU session) ID, the first access network device may determine, based on the second parameter, that the first network element type to which the first network element belongs is a session management (SM) network element.

For another example, when the second parameter includes short message related information, the first access network device may determine, based on the second parameter, that the first network element type to which the first network element belongs is a short message service network element.

For another example, when the second parameter includes an authentication request or an authentication vector, the first access network device may determine, based on the second parameter, that the first network element type to which the first network element belongs is an authentication network element.

In another possible implementation, the second parameter includes type information indicating the first NAS type to which the first NAS connection belongs, and the first NAS type represents that the first NAS connection is a connection between the terminal device and the network element of the first network element type. Therefore, it may be understood that the type information indirectly indicates the first network element type to which the first network element belongs, or it may be understood that the type information indicates a specific type of NAS connection that the second NAS security establishment request is used to request to establish.

For example, when a value of the second parameter is 1, the first access network device may determine, based on the second parameter, that the first NAS connection that currently needs to be established is an SM-NAS connection. In this case, the first network element type to which the first network element belongs is a session management (SM) network element.

For another example, when a value of the second parameter is 2, the first access network device may determine, based on the second parameter, that the first NAS connection that currently needs to be established is an MM-NAS connection. In this case, the first network element type to which the first network element belongs is an access network element.

For another example, when a value of the second parameter is 3, the first access network device may determine, based on the second parameter, that the first NAS connection that currently needs to be established is an authentication-type security connection. In this case, the first network element type to which the first network element belongs is an authentication network element.

In still another possible implementation, the second parameter includes information that can be identified by the network element of the first network element type and type information indicating the first network element type.

It should be understood that the foregoing several examples are merely examples for describing possible forms of the second parameter, and do not constitute any limitation on the protection scope of this application. Other parameters that can assist the first access network device in determining a specific network element type of the first network element also fall within the protection scope of this application.

Further, after determining the first network element type to which the first network element belongs, the first access network device may determine the identifier of the first network element in the following several manners:

In a possible implementation, the first access network device determines the identifier of the first network element based on local configuration information. For example, the local configuration information includes a correspondence #1 between the terminal device and different network elements that serve the terminal device. After determining the first network element type to which the first network element belongs, the first access network device may determine the identifier of the first network element based on the correspondence #1 and an identifier of the terminal device.

In another possible implementation, the first access network device determines the identifier of the first network element through another access network device. For example, the first access network device queries, by using a query message, the identifier of the first network element from an access network device last visited by the terminal device.

In still another possible implementation, the first access network device determines the identifier of the first network element through a management network element. For example, the first access network device queries the identifier of the first network element from a network function discovery network element (for example, an NRF) by using a query message.

It should be understood that the foregoing several examples are merely examples for describing possible manners in which the first access network device determines the identifier of the first network element, and do not constitute any limitation on the protection scope of this application.

For ease of understanding, an example in which the second parameter includes the information that can be identified by the network element of the first network element type and/or the type information indicating the first network element type is used to describe, with reference to Table 1a to Table 1c, logic of determining the identifier of the first network element by the access network device based on the second parameter.

**Table 1a: The second parameter includes the information that can be identified by the network element of the first network element type and the type information indicating the first network element type**

| Type information | Information that can be identified | First network element type to which the first network element belongs | ID of the first network element |
|---|---|---|---|
| 1 | DNN/PDU session ID, or the like | Session network element | 730ab3 |
| 2 | Cell ID, S-NSSAI, or the like | Access network element | 163c2b |
| 3 | Authentication vector | Authentication network element | 163c21 |

**Table 1b: The second parameter includes the type information indicating the first network element type**

| Type information | First network element type to which the first network element belongs | ID of the first network element |
|---|---|---|
| 1 | Session network element | 730ab3 |
| 2 | Access network element | 163c2b |
| 3 | Authentication network element | 163c21 |

**Table 1c: The second parameter includes the information that can be identified by the network element of the first network element type**

| Information that can be identified | First network element type to which the first network element belongs | ID of the first network element |
|---|---|---|
| DNN/PDU session ID, or the like | Session network element | 730ab3 |
| Cell ID, S-NSSAI, or the like | Access network element | 163c2b |
| Authentication vector | Authentication network element | 163c21 |

S513: The access network device forwards the second NAS security establishment request to the first network element.

In this embodiment, after receiving the second NAS security establishment request, the first network element obtains a first NAS security context in response to the second NAS security establishment request.

In a possible implementation, the first network element may generate the first NAS security context by itself.

In another possible implementation, the first network element may receive the first NAS security context from a security network element. In this implementation, an identifier search mechanism may be established (for example, the first network element stores a correspondence between a temporary identifier and a global identifier of the terminal device in a repository function network element, and the security network element stores a correspondence between the global identifier of the terminal device and an identifier of the security network element in the repository function network element), so that a core network element can obtain a NAS security context from the security network element based on the identifier search mechanism.

A manner in which the first network element obtains the first NAS security context is described below with reference to specific examples (for example, descriptions of obtaining the first NAS security context by the first network element in Example 1 and Example 3 below). Details are not described herein again.

Further, in this embodiment, after receiving the first message, the terminal device may generate the first NAS security context. The method procedure shown in FIG. 5 further includes the following step:
S520: The terminal device generates the first NAS security context.

Specifically, the terminal device generates the first NAS security context based on the first NAS type to which the first NAS connection belongs.

Optionally, if the first message explicitly carries the information indicating the first NAS type, the terminal device may determine, based on the information explicitly carried in the first message, the first NAS type to which the first NAS connection belongs.

Optionally, if the first message does not explicitly carry the information indicating the first NAS type, the terminal device may determine, based on a type of the first message, the first NAS type to which the first NAS connection belongs. For example, the protocol predefines that the first message between the terminal device and the network element of the first network element type (for example, the AMF) is the message #A, and the first message between the terminal device and the network element of the second network element type (for example, the SMF) is the message #B. When receiving the message #A, the terminal device may determine, based on a name of the message, that the message is from the network element of the first network element type, and a NAS type to which a corresponding NAS connection belongs is the first NAS type.

For ease of understanding, the following describes, with reference to a specific example, how the terminal device generates the first NAS security context based on the first NAS type.

The terminal device determines the first NAS security context based on a NAS primary security context and a hash value of the first NAS type.

In this application, the NAS primary security context may be understood as a basic security context, and may be generated through primary authentication, or may be determined in another manner (for example, a predefined manner or a negotiation manner). This is not limited in this application. A hash value calculation algorithm of the first NAS type may be obtained by the terminal device and the first network element through negotiation (for example, obtained through NAS SMC process negotiation), or may be predefined, or may be preconfigured by a management device. For example, the terminal device may register a supported algorithm with a network side by using a registration message in the primary authentication procedure. When selecting one algorithm from at least one algorithm supported by the terminal device to generate the first NAS security context, the first network element may notify, by using the first message in step S510, the terminal device of a specific algorithm that is used, and the terminal device selects the algorithm used by the first network element, to generate the first NAS security context. A specific negotiation process is not limited in this embodiment.

For example, the information carried in the first message is shown in Table 2 below:

| UE security capability description | Service type category number | Corresponding algorithm ID |
|---|---|---|
| 6G UE | 1 | SHA256 AlgID = 1 |
| 6G UE | 2 | SHA512 AlgID = 2 |
| 5G UE | 2 | SHA256 AlgID = 2 |

In this case, a manner of determining the first NAS security context generated by the terminal device may be a hash value of (AlgID⊕NAS identifier), where the hash algorithm and the NAS AlgID are shown in Table 2. The NAS identifier is the NAS identifier #1 carried in the first message in step S510.

After the terminal device generates the first NAS security context, the terminal device may perform security protection on communication between the terminal device and the first network element by using the first NAS security context. That the terminal device performs security protection on communication between the terminal device and the first network element based on the first NAS security context includes: The terminal device, as a sender, performs encryption and/or integrity protection on to-be-sent information based on the first NAS security context, where encryption of the to-be-sent information can avoid information leakage, and integrity protection of the to-be-sent information can prevent the information from being tampered with by a third party. Alternatively, the terminal device, as a receiver, performs decryption and/or integrity verification on received information based on the first NAS security context, where information sent by a transmitting end may be obtained by decrypting the received information, and information received through integrity verification may be used to verify whether the information is tampered with by a third party.

Further, in this embodiment, the terminal device may perform security protection in a subsequent NAS connection establishment process by using the first NAS security context. The first NAS security context may be a NAS security context corresponding to a 1^{st} established NAS connection. For example, in a process of establishing a second NAS connection between the terminal device and a second network element, the terminal device performs, based on the first NAS security context, security protection on a first NAS security establishment request used to request to establish the second NAS connection. The method procedure shown in FIG. 5 further includes the following step:
S530: The terminal device sends a third message to a second access network device, in other words, the second access network device receives the third message from the terminal device, where the first access network device and the second access network device are a same device or different devices.

For example, the terminal device sends the third message to the second access network device, where the third message includes a first parameter and a first NAS security establishment request security-protected based on first NAS security context, and the first parameter is used by the second access network device to determine the second network element type to which the second network element belongs. Further, the second access network device may determine an identifier of the second network element based on the second network element type, and forward, to the second network element, the first NAS security establishment request security-protected based on the first NAS security context. In this case, the method procedure shown in FIG. 5 further includes the following step:
S531: The second access network device determines the identifier of the second network element.

Specifically, a manner in which the second access network device determines the identifier of the second network element is similar to the manner in which the first access network device determines the identifier of the first network element in step S512, and details are not described herein again.

Optionally, the third message further includes third indication information, and the third indication information indicates that the second NAS connection is an N^{th} NAS connection, where N is an integer greater than 1.

S532: The second access network device forwards, to the second network element, the first NAS security establishment request security-protected based on the first NAS security context.

After receiving the first NAS security establishment request security-protected based on the first NAS security context, the second network element obtains a second NAS security context used to establish the second NAS connection.

In a possible implementation, the second network element obtains, from the first network element, the second NAS security context and/or a NAS primary security context used to generate the second NAS security context.

In another possible implementation, the second network element obtains, from a security network element, the second NAS security context and/or a NAS primary security context used to generate the second NAS security context. In this implementation, an identifier search mechanism may be established (for example, the first network element stores a correspondence between a temporary identifier and a global identifier of the terminal device in a repository function network element, and the security network element stores a correspondence between the global identifier of the terminal device and an identifier of the security network element in the repository function network element), so that a core network element can obtain a NAS security context from the security network element based on the identifier search mechanism.

When the second network element obtains the NAS primary security context used to generate the second NAS security context, the second network element may generate the second NAS security context based on the NAS primary security context and a second NAS type to which the second NAS connection belongs. A manner in which the second network element obtains the second NAS security context is described below with reference to specific examples (for example, descriptions of obtaining the second NAS security context by the second network element in Example 1 and Example 3 below). Details are not described herein again.

Optionally, the second network element may activate NAS security protection for the second NAS connection by using a second message. The method procedure shown in FIG. 5 further includes the following step:
S540: The second network element sends the second message to the terminal device, in other words, the terminal device receives the second message from the second network element.

Optionally, the second message includes second indication information indicating that a NAS type to which the second NAS connection belongs is the second NAS type, where the second NAS type represents that the second NAS connection is a connection between the terminal device and the network element of the second network element type, and a type of the second network element is the second network element type.

Specifically, after receiving the second message, the terminal device generates the second NAS security context based on the second NAS type to which the second NAS connection belongs. The method procedure shown in FIG. 5 further includes the following step:
S550: The terminal device generates the second NAS security context.

It should be understood that a manner in which the terminal device generates the second NAS security context in this embodiment is similar to the manner in which the terminal device generates the first NAS security context in step S520. Details are not described herein again.

Specifically, after generating the second NAS security context, the terminal device may perform security protection on communication between the terminal device and the second network element based on the second NAS security context.

That the terminal device performs security protection on communication between the terminal device and the second network element based on the second NAS security context includes: The terminal device, as a sender, performs encryption and/or integrity protection on to-be-sent information based on the second NAS security context, where encryption of the to-be-sent information can avoid information leakage, and integrity protection of the to-be-sent information can prevent the information from being tampered with by a third party. Alternatively, the terminal device, as a receiver, performs decryption and/or integrity verification on received information based on the second NAS security context, where information sent by a transmitting end may be obtained by decrypting the received information, and information received through integrity verification may be used to verify whether the information is tampered with by a third party.

In the communication method shown in FIG. 5, the terminal device may establish NAS connections to a plurality of core network elements. Therefore, the NAS security establishment method may be applied to the distributed NAS architecture shown in FIG. 3. In addition, in the NAS security establishment method, the terminal device may perform security protection on a NAS security establishment request by using a generated NAS security context, to avoid excessive plaintext transmissions and/or information tampering, thereby improving security of NAS security establishment.

In addition, in the communication method shown in FIG. 5, the terminal device may further determine, based on a first identifier carried in the second message and a second identifier received from the first network element, whether the second network element is an authorized network element, to prevent another unauthorized network element from establishing a NAS connection to the terminal device, thereby enhancing security. The first identifier is an identifier that is provided by the second network element and that is used to determine the second network element, and the second identifier is an identifier that is provided by the first network element (or the security network element) and that is used to determine the second network element.

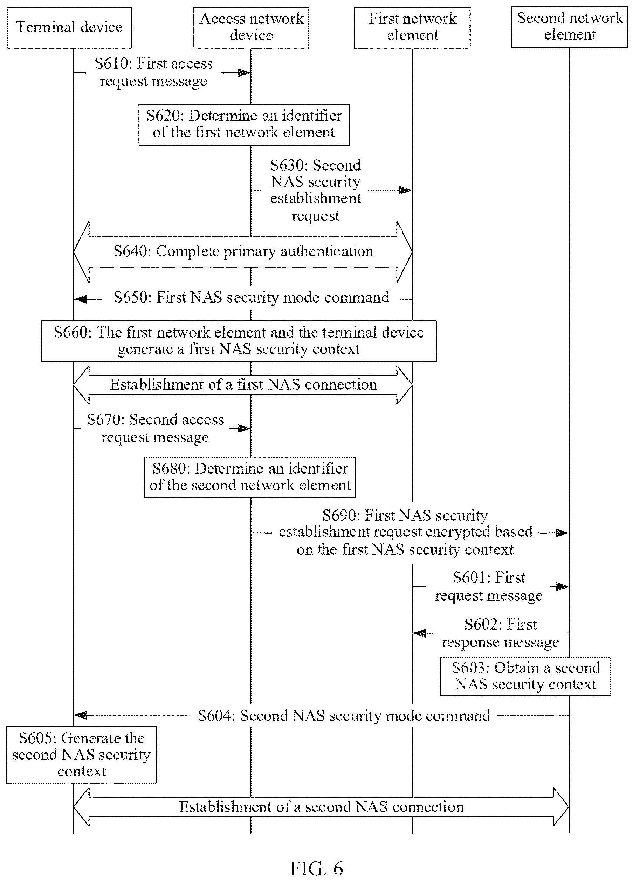

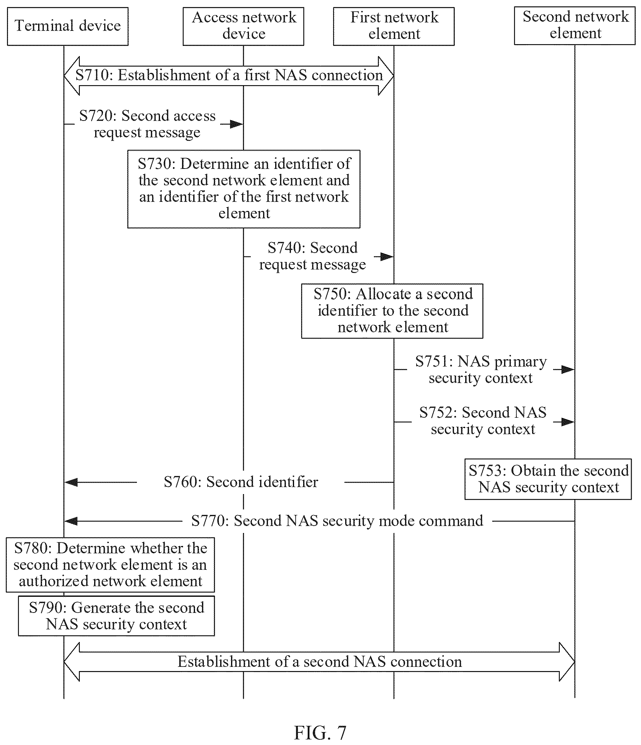

For ease of understanding, the following describes in detail the communication method shown in FIG. 5 with reference to Example 1 and Example 2. For ease of description, Example 1 and Example 2 mainly describe a case in which the first access network device and the second access network device are a same device. FIG. 6 is a diagram of Example 1, and FIG. 7 is a diagram of Example 2.

FIG. 6 is a schematic flowchart of another communication method according to this application. The method includes the following step.

S610: A terminal device sends a first access request message to an access network device.

The first access request message is equivalent to the fourth message sent by the terminal device to the access network device in step S511 in the communication method shown in FIG. 5.

Specifically, the first access request message includes a second parameter sent to the access network device and a second NAS security establishment request sent to a first network element. The second parameter is used by the access network device to determine the first network element. The second NAS security establishment request is used to request to establish a first NAS connection between the terminal device and the first network element.

For example, the second NAS security establishment request includes information required for establishing the first NAS connection between the terminal device and the first network element. For example, the second NAS security establishment request includes information such as an identifier of the terminal device (including but not limited to information that can be used to identify the terminal device, such as a temporary identifier of the terminal device and a permanent identifier of the terminal device), a security capability description of the terminal device, single network slice selection assistance information (Single Network Slice Selection Assistance information, S-NSSAI), and a NAS key set identifier (NAS key set identifier, ngKSI).

It should be noted that, for information included in the second NAS security establishment request sent by the terminal device to the first network element through the access network device in this embodiment, refer to descriptions of information included in a NAS initial message in a NAS security establishment procedure specified in a current protocol. This is not limited in this application.

For example, in this embodiment, before sending the first access request message to the access network device, the terminal device may determine, in the following several manners, that the first access request message needs to be sent to the access network device:

In a possible implementation, when the terminal device does not locally store a NAS security context between the terminal device and the first network element, the terminal device determines to send the first access request message to the access network device.

In another possible implementation, when a NAS security context that is between the terminal device and the first network element and that is locally stored in the terminal device expires (for example, a valid time expires), the terminal device determines to send the first access request message to the access network device.

In still another possible implementation, when a NAS security context that is between the terminal device and the first network element and that is locally stored in the terminal device needs to be updated, the terminal device determines to send the first access request message to the access network device.

It should be understood that the foregoing several implementations are merely examples for describing possible manners in which the terminal device determines that the first access request message needs to be sent to the access network device, and do not constitute any limitation on the protection scope of this application. Alternatively, when another trigger event occurs, the terminal device may determine to send the first access request message to the access network device. For example, the terminal device receives a trigger message of a management network element. Examples are not described herein again.

The second parameter included in the first access request message may be understood as information that needs to be parsed by the access network device. Specifically, in this embodiment, the access network device may determine, based on the second parameter, which type of core network element should be selected as the first network element, and forward the second NAS security establishment request to the first network element.

It can be learned from the foregoing descriptions that the second parameter carried in the first access request message is used by the access network device to determine a network element type to which the first network element belongs. In this case, the method procedure shown in FIG. 6 further includes the following step:
S620: The access network device determines an identifier of the first network element.

For step S620, refer to the descriptions of determining the identifier of the first network element by the first access network device in step S512 in the communication method shown in FIG. 5. Details are not described herein again.

Further, after determining the identifier of the first network element, the access network device forwards the second NAS security establishment request to the first network element. In this case, the method procedure shown in FIG. 6 further includes the following step:
S630: The access network device sends the second NAS security establishment request to the first network element.

Specifically, the access network device sends a message #1 to the first network element, where the message #1 includes the identifier of the terminal device, the identifier of the first network element, and the second NAS security establishment request.

Further, in this embodiment, after receiving the second NAS security establishment request, the first network element may obtain a NAS primary security context by initiating a primary authentication procedure. The method procedure shown in FIG. 6 further includes the following step:
S640: The terminal device and the first network element complete primary authentication.

Specifically, after the terminal device and the first network element complete primary authentication, both the terminal device and the first network element derive the NAS primary security context. For example, the derived NAS primary security context obtained may be referred to as Knas or Kamf.

It should be understood that, for related descriptions of the actions of the terminal device in the primary authentication procedure in this embodiment, refer to descriptions of the actions on the terminal device side in the primary authentication procedure in the existing protocol. Similarly, for related descriptions of the actions of the first network element in the primary authentication procedure in this embodiment, refer to descriptions of actions on an SEAF side in a primary authentication procedure in an existing protocol. The primary authentication procedure is not described in detail in this embodiment.

Specifically, after both the terminal device and the first network element derive the NAS primary security context, the method procedure shown in FIG. 6 further includes the following step:
S650: The first network element sends a first NAS security mode command (NAS Security Mode Command) to the terminal device.

The first NAS security mode command is equivalent to the first message sent by the first network element to the terminal device in step S510 in the communication method shown in FIG. 5.

Specifically, the first NAS security mode command includes a NAS identifier #1, first indication information, and a security capability description of the terminal device. The security capability description information of the terminal device is the security capability of the terminal device that is carried in the second NAS security establishment request in step S610, so that the terminal device reconfirms the security capability. For details, refer to related descriptions of the security capability description of the terminal device that is carried in a NAS capability negotiation command request in an existing protocol. This is not limited in this embodiment.

In this embodiment, after receiving the first NAS security mode command sent by the first network element, the terminal device may generate a first NAS security context based on a NAS type to which the first NAS connection belongs and the NAS primary security context. In addition, the first network element may also generate the first NAS security context based on the NAS type to which the first NAS connection belongs and the NAS primary security context. The method procedure shown in FIG. 6 further includes the following step:
S660: The first network element and the terminal device generate the first NAS security context.

Specifically, the terminal device generates the first NAS security context based on the NAS type to which the first NAS connection belongs and the NAS primary security context, and the first network element generates the first NAS security context based on the NAS type to which the first NAS connection belongs and the NAS primary security context. The first network element may learn of the network element type to which the first network element belongs, and determine, based on the network element type to which the first network element belongs, the NAS type to which the first NAS connection belongs.

For example, for a manner in which the first network element and the terminal device generate the first NAS security context based on the NAS type to which the first NAS connection belongs and the NAS primary security context, refer to the descriptions of generating the first NAS security context by the terminal device in step S520 in the communication method shown in FIG. 5. Details are not described herein again.

It should be understood that, in this embodiment, the first network element and the terminal device may generate the first NAS security context simultaneously or sequentially (for example, the first network element generates the first NAS security context before sending the first NAS security mode command to the terminal device). In this embodiment, a time sequence in which the first network element generates the first NAS security context and the terminal device generates the first NAS security context is not limited.

In addition, it should be noted that, in this embodiment, the terminal device may request to establish NAS connections to different core network elements. For example, for the distributed NAS architecture shown in FIG. 3, the terminal device may not establish a NAS connection to another core network element through an AMF. Therefore, in this embodiment, the NAS type to which the first NAS connection belongs may be used to enable the terminal device to generate different NAS security contexts based on the NAS primary security context and the NAS type. In this way, NAS connections of different NAS types may have different NAS security contexts, thereby greatly improving security.

After the first network element and the terminal device generate the first NAS security context, the terminal device and the first network element may perform security protection on communication between the terminal device and the first network element based on the first NAS security context. Specifically, for a manner of establishing the first NAS connection to the first network element after the first NAS security context is generated, refer to descriptions of establishing a NAS connection in an existing protocol. This is not limited in this embodiment.

It should be understood that the communication method provided in this application may be applied to a distributed NAS architecture, or another scenario in which a terminal device requests to establish a plurality of NAS connections to different core network elements. For ease of understanding, in this embodiment, an example in which the first NAS connection is established between the terminal device and the first network element and a second NAS connection is established between the terminal device and a second network element is used for description. Specifically, the terminal device establishes the second NAS connection to the second network element after establishing the first NAS connection to the first network element, the method procedure shown in FIG. 6 further includes the following step:
S670: The terminal device sends a second access request message to the access network device.

The second access request message is equivalent to the third message sent by the terminal device to the access network device in step S530 in the communication method shown in FIG. 5.

Specifically, the second access request message includes a first parameter and a first NAS security establishment request security-protected based on the first NAS security context. The first NAS security establishment request is used to request to establish the second NAS connection. The second NAS connection is a NAS connection between the terminal device and the second network element. The first parameter is used by the access network device to determine a second network element type to which the second network element belongs

For example, the first NAS security establishment request security-protected based on the first NAS security context includes: a first NAS security establishment request encrypted and/or integrity-protected based on the first NAS security context.

For example, the first NAS security establishment request includes information required for establishing the second NAS connection between the terminal device and the second network element. For example, the first NAS security establishment request includes information such as the identifier of the terminal device (including but not limited to the information that can be used to identify the terminal device, such as the temporary identifier of the terminal device and the permanent identifier of the terminal device), the security capability description of the terminal device, the S-NSSAI, and the ngKSI. It should be understood that the information included in the first NAS security establishment request is the same as the information included in the second NAS security establishment request shown in step S610, and a difference lies in that the first NAS security establishment request is encrypted by using the first NAS security context, thereby improving message transmission security.

Optionally, the second access request message further includes third indication information, and the third indication information indicates that the second NAS connection is an N^{th} NAS connection, where N is an integer greater than 1.

For example, the third indication information identifies establishment of a 2^{nd} NAS connection, indicating that one NAS connection has been established, and currently initiated NAS connection establishment is establishment of a 2^{nd} NAS connection.

Optionally, if the second network element is an SMF network element, the second access request message may be carried in a session establishment request, or the second access request message is a session establishment request. It should be understood that a specific type of the second network element is not limited in this embodiment, and the second network element may be an SMF, a PCF, or the like.

As described above about the second parameter, the first parameter may also be in a possible form of the second parameter. Details are not described herein again.

Further, after receiving the second access request message, the access network device may determine an identifier of the second network element based on the first parameter in the second access request message. The method procedure shown in FIG. 6 further includes the following step:
S680: The access network device determines the identifier of the second network element.

For a specific determining manner, refer to the foregoing descriptions of determining the identifier of the first network element by the access network device. Details are not described herein again.

S690: The access network device sends, to the second network element, the first NAS security establishment request security-protected based on the first NAS security context.

Specifically, the access network device sends a message #2 to the second network element, where the message #2 includes the identifier of the terminal device, the identifier of the first network element, the identifier of the second network element, and the first NAS security establishment request security-protected based on the first NAS security context.

It should be understood that the identifier of the second network element that is carried in the message #2 is determined by performing step S680.

The identifier of the first network element that is carried in the message #2 may be determined in the following manners:

In a possible implementation, the access network device determines the identifier of the first network element based on historical communication data. For example, if the access network device determines, based on a historical record of forwarding a message to different core network elements, that the second NAS security establishment request has been forwarded to the first network element before the first access request message is received, the access network device determines a specific network element type of the first network element.

In another possible implementation, the access network device may obtain the identifier of the first network element by querying another access network device.

In still another possible implementation, the access network device may obtain the identifier of the first network element by querying a network function discovery network element (for example, an NRF).

It should be understood that the foregoing several implementations are merely examples for describing possible manners in which the access network device determines the identifier of the first network element that is carried in the message #2, and do not constitute any limitation on the protection scope of this application.

It should be noted that, in this embodiment, the access network device may record and store only the identifier of the first network element that establishes the first NAS connection to the terminal device, and the first NAS security context is used for protection in a second NAS connection establishment procedure, a third NAS connection establishment procedure, a fourth NAS connection establishment procedure, and so on subsequently. However, the access network device may also store identifiers of all historical network elements that establish NAS connections to the terminal device. This is not limited in this embodiment.

Specifically, the message #2 carries the identifier of the first network element, so that the second network element can determine the first network element and obtain, from the first network element, information required for generating the second NAS security context.

S601: The second network element sends a first request message to the first network element.

In a possible implementation, the first request message is used to request the first network element to transfer the NAS primary security context.

In this implementation, the second network element may generate the second NAS security context based on the NAS primary security context received from the first network element and the NAS type to which the second NAS connection belongs.

In another possible implementation, the first request message is used to request the first network element to generate the second NAS security context.

In this implementation, the first network element determines, based on the first request message, the second NAS security context to be generated, and then generates the corresponding second NAS security context; and the second network element may directly receive the second NAS security context from the first network element.

For example, the first request message includes the identifier of the terminal device, the identifier of the first network element, and a request description. The request description may be explicit, or may be implicitly carried based on a name of a fifth request message. There are two request descriptions corresponding to the foregoing two implementations:

In a first request description, the second network element requests the first network element to execute a security context transfer request. In a second request description, the second network element requests the first network element to generate a security context.

S602: The first network element sends a first response message to the second network element.

Corresponding to content requested by the first request message, the first response message carries the second NAS security context and/or the NAS primary security context.

S603: The second network element obtains the second NAS security context.

Optionally, when the first response message carries the second NAS security context, the second network element may obtain the second NAS security context from the first response message.

Optionally, when the first response message carries the NAS primary security context, the second network element may generate the second NAS security context based on the NAS primary security context obtained from the first response message and the NAS type to which the second NAS connection belongs. For a manner in which the second network element generates the second NAS security context based on the NAS type and the NAS primary security context, refer to the manner in which the first network element generates the first NAS security context based on the NAS type and the NAS primary security context in step S660. Details are not described herein again.

Further, after the second network element obtains the second NAS security context, the method procedure shown in FIG. 6 further includes the following step:
S604: The second network element sends a second NAS security mode command to the terminal device.

The second NAS security mode command is equivalent to the second message sent by the second network element to the terminal device in step S540 in the communication method shown in FIG. 5.

Specifically, the second NAS security mode command includes a first identifier, second indication information, and security capability description information of the terminal device. The first identifier is used to determine that a network element that currently needs to establish a NAS connection is the second network element, so that the terminal device determines, based on the first identifier, that the network element that currently needs to establish a NAS connection is the second network element. For example, the first identifier may be ngKSI.

The third indication information identifies the NAS type to which the second NAS connection to be established belongs, so that the terminal device generates different NAS security contexts based on different NAS types.

S605: The terminal device generates the second NAS security context.

Specifically, the terminal device generates the second NAS security context based on the NAS type to which the second NAS connection belongs and the NAS primary security context. It should be understood that a manner in which the terminal device generates the second NAS security context in this embodiment is similar to the manner in which the terminal device generates the first NAS security context in step S660. Details are not described herein again.

After the second network element and the terminal device generate the second NAS security context, the terminal device and the second network element may perform security protection on communication between the terminal device and the second network element based on the second NAS security context. Specifically, for a manner of establishing the second NAS connection to the second network element after the second NAS security context is generated, refer to descriptions of establishing a NAS connection in an existing protocol. This is not limited in this embodiment.

In the communication method shown in FIG. 6, the terminal device may generate different NAS security contexts based on different NAS types, so that the terminal device separately uses the different NAS security contexts to establish NAS protection message security, thereby improving network security.

This application further provides a communication method, to prevent an unauthorized second network element to establish a NAS connection to a terminal device in the communication procedures shown in FIG. 5 and FIG. 6. For ease of understanding, the following provides descriptions with reference to FIG. 7.

FIG. 7 is a schematic flowchart of still another communication method according to an embodiment of this application. The method includes the following steps:
S710: Establish a first NAS connection between a terminal device and a first network element.

Specifically, for descriptions of S710, refer to the descriptions of step S610 to step S660 in the embodiment shown in FIG. 6. Details are not described herein again.

S720: The terminal device sends a second access request message to an access network device.

Specifically, for descriptions of S720, refer to the descriptions of step S670 in the embodiment shown in FIG. 6. Details are not described herein again.

S730: The access network device determines an identifier of a second network element and an identifier of the first network element.

Specifically, for a manner in which the access network device determines the identifier of the second network element, refer to the descriptions of step S680 in the embodiment shown in FIG. 6. Details are not described herein again. In addition, the access network device may obtain the identifier of the first network element based on local configuration or from another access network device or another management network element. Specifically, for a manner in which the access network device determines the identifier of the first network element, refer to the descriptions of determining the identifier of the first network element by the access network device in step S690 in the embodiment shown in FIG. 6. Details are not described herein again.

In this embodiment, after the access network device determines the identifier of the second network element and the identifier of the first network element, a difference from the embodiment shown in FIG. 6 is that the access network device does not directly send a first NAS security establishment request security-protected based on a first NAS security context to the second network element, but sends a second request message to the first network element, to request the first network element to provide a NAS primary security context and/or a second NAS security context to the second network element. In this case, the method procedure shown in FIG. 7 further includes the following step:
S740: The access network device sends the second request message to the first network element.

In a possible implementation, the second request message is used to request the first network element to transfer the NAS primary security context to the second network element.

In another possible implementation, the second request message is used to request the first network element to generate the second NAS security context and provide the second NAS security context for the second network element.

Specifically, the second request message includes an identifier of the terminal device, the identifier of the second network element, and the first NAS security establishment request security-protected based on the first NAS security context. The identifier of the second network element that is carried in the second request message is used by the first network element to determine to provide the NAS primary security context and/or the second NAS security context for the second network element. The first NAS security establishment request that is security-protected based on the first NAS security context and that is carried in the second request message is used by the first network element to decrypt, based on the first NAS security context, the first NAS security establishment request security-protected based on the first NAS security context, and may perform further processing after the decryption.

Optionally, the second request message further includes second indication information, and the second indication information indicates a NAS type to which a second NAS connection belongs. Optionally, the second request message further includes a first identifier, and the first identifier is used to determine that a network element that currently needs to establish a NAS connection is the second network element.

Further, in this embodiment, after receiving the second request message, the first network element may allocate a second identifier to the second network element based on the second request message, where the second identifier is used to determine the second network element. The method procedure shown in FIG. 7 further includes the following step:
S750: The first network element allocates the second identifier to the second network element.

In a possible implementation, the first network element allocates the second identifier to the second network element by itself. For example, the first network element allocates NAS ID=1 to the second network element.

In another possible implementation, the first network element determines, through another network element, the second identifier allocated to the second network element.

For example, the first network element first allocates a NAS ID #1, and sends a request query message to the second network element to determine whether the second network element accepts the NAS ID #1. If an SM network element accepts the NAS ID #1, the SM network element returns an acknowledgment message indicating that the NAS ID #1 can be selected.

For another example, the first network element first allocates a NAS ID #1, and sends a request query message to another network element (for example, a PCF), to determine whether the NAS ID #1 is feasible.

Optionally, in this embodiment, after receiving the second request message, the first network element may first determine whether the second network element is an available network element. For example, no feedback is obtained from the query message sent by the first network element to the second network element, and the first network element determines that the second network element is unavailable. For another example, the first network element queries, by using the query message, a network function discovery network element (for example, an NRF) about whether the second network element is available.

If the second network element is an available network element, step S750 is performed to allocate the second identifier to the second network element.

If the second network element is an unavailable network element, the first network element may send a failure message to the access network device, where the failure message indicates that the request fails, so that the access network device may re-determine the identifier of the second network element based on the failure message.

In addition, in this embodiment, when the second request message is used to request the first network element to transfer the NAS primary security context to the second network element, the method procedure shown in FIG. 7 further includes the following step:
S751: The first network element sends the NAS primary security context to the second network element.

Specifically, the first network element sends a message #3 to the second network element, where the message #3 includes the identifier of the terminal device, the NAS primary security context, and the second identifier. The second network element may generate the second NAS security context based on the received NAS primary security context and the NAS type.

When the second request message is used to request the first network element to provide the second NAS security context for the second network element, the method procedure shown in FIG. 7 further includes the following step:
S752: The first network element sends the second NAS security context to the second network element.

Specifically, the first network element sends a message #4 to the second network element, where the message #4 includes the identifier of the terminal device, the second NAS security context, and the second identifier.

S753: The second network element obtains the second NAS security context.

Specifically, for descriptions of S753, refer to the descriptions of step S603 in the embodiment shown in FIG. 6. Details are not described herein again.

Further, the first network element may send the second identifier to the terminal device by using the first NAS connection, so that the terminal device determines whether the second network element is an authorized network element. The method procedure shown in FIG. 7 further includes the following step:
S760: The first network element sends the second identifier to the terminal device.

Specifically, the first network element sends a message #5 to the terminal device, where the message #5 includes the second identifier. Optionally, the message #5 further includes a NAS message type. A function of the message #5 may be understood as: predicting a NAS identifier carried in a NAS security mode command sent by the second network element in the future.

S770: The second network element sends a second NAS security mode command to the terminal device.

Specifically, for descriptions of S770, refer to the descriptions of step S604 in the embodiment shown in FIG. 6. Details are not described herein again.

S780: The terminal device determines whether the second network element is an authorized network element.

Specifically, after receiving the second NAS security mode command, the terminal device may determine, based on the first identifier carried in the second NAS security mode command and the second identifier received from the first network element, whether the second network element that sends the second NAS security mode command is a network element authorized by the first network element. If the second network element is a network element authorized by the first network element, the terminal device generates the second NAS security context. If the second network element is not a network element authorized by the first network element, the terminal device rejects to generate the second NAS security context and establish the second NAS connection to the second network element.

In a possible implementation, the first identifier is an identifier (for example, the NAS ID #1 of the second network element) allocated by the first network element to the second network element, the second identifier is an identifier (for example, a NAS ID #2 of the second network element) of the second network element carried in the second NAS security mode command, and the terminal device may determine, based on a degree of matching between the first identifier and the second identifier, whether the second network element is a network element authorized by the first network element.

For example, if the NAS ID #1 is the same as the NAS ID #2, the terminal device determines that the second network element is a network element authorized by the first network element; or if the NAS ID #1 is different from the NAS ID #2, the terminal device determines that the second network element is not a network element authorized by the first network element.

In another possible implementation, the first identifier is an identifier (for example, the NAS ID #1 of the second network element) allocated by the first network element to the second network element, the second identifier is a signature carried in the second NAS security mode command, and the terminal device determines, based on the obtained first identifier and signature, whether the second network element is a network element authorized by the first network element.

For example, if the terminal device determines that the signature carried in the second NAS security mode command is a signature of the first network element, the terminal device determines that the second network element is a network element authorized by the first network element.

It should be understood that the foregoing possible implementations are merely examples, and do not constitute any limitation on the protection scope of this application. The terminal device may alternatively determine, in another manner, whether the second network element is an authorized network element. Examples are not described herein one by one.

In this embodiment, a case in which the second network element is a network element authorized by the first network element and the terminal device generates the second NAS security context is mainly considered. In this case, the method procedure shown in FIG. 7 further includes the following step:
S790: The terminal device generates the second NAS security context.

Specifically, for descriptions of S790, refer to the descriptions of step S605 in the embodiment shown in FIG. 6. Details are not described herein again.

In the communication method shown in FIG. 7, the access network device sends the second NAS security establishment request to the first network element, and the first network element authorizes forwarding of the second NAS security establishment request to the second network element, to prevent an unauthorized second network element from establishing a NAS connection to the terminal device, thereby further enhancing security.

This application further provides a communication method. A terminal device may derive NAS security contexts corresponding to NAS connections of a plurality of NAS types at a time. In a NAS connection establishment process after establishment of a 1^{st} NAS connection, a core network element may directly generate a security context based on a NAS type without performing NAS security mode negotiation. In this way, the terminal device can establish NAS security connection to different core network elements by using different NAS security contexts respectively, thereby improving network security.

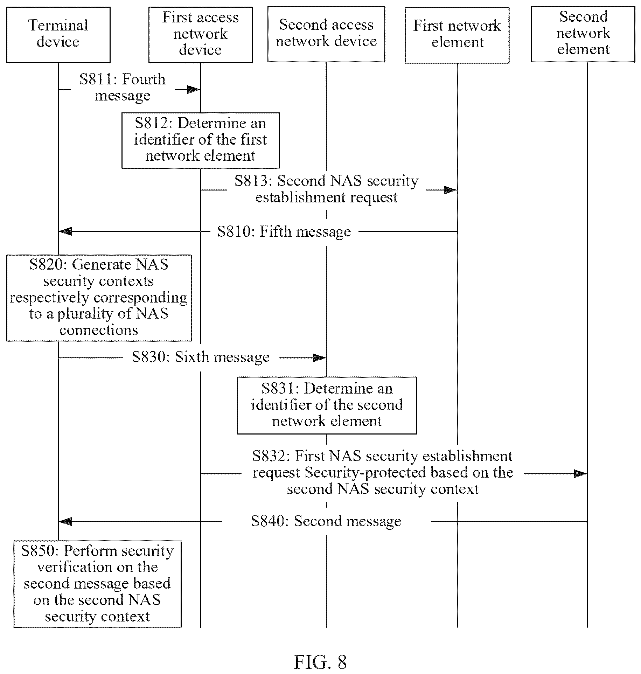

For ease of understanding, the following provides descriptions with reference to FIG. 8. FIG. 8 is a schematic flowchart of still another communication method according to an embodiment of this application. The method includes the following step:
S810: A terminal device receives a fifth message from a first network element through a first access network device, in other words, the first network element sends the fifth message to the terminal device through the first access network device.

Specifically, in a process of establishing a first NAS connection between the terminal device and the first network element, the first network element may trigger, by using the fifth message, the terminal device to establish a NAS connection to a core network element, in other words, the first network element may activate NAS security protection for the NAS connection between the terminal device and the core network element by using the fifth message.

For example, the fifth message is a NAS security mode command (NAS Security Mode Command) sent by the first network element to the terminal device through the first access network device.

For example, the fifth message includes a NAS identifier #1 and security capability description information of the terminal device. The NAS identifier #1 identifies that a network element that currently needs to establish a NAS connection is the first network element, so that the terminal device determines, based on the NAS identifier #1, that the network element that currently needs to establish the NAS connection is the first network element. For example, the NAS identifier #1 may be ngKSI.

For example, the fifth message includes first indication information indicating that a NAS type to which the first NAS connection belongs is a first NAS type. The first NAS type represents that the first NAS connection is a connection between the terminal device and a network element of a first network element type, and a type of the first network element is the first network element type. Therefore, in this embodiment, in a scenario in which the terminal device requests to establish a plurality of NAS connections, the terminal device may determine, based on the first indication information, a specific type of NAS connection that needs to be established.

For example, if the first indication information identifies that the NAS type to which the first NAS connection to be established belongs is MM-NAS, the terminal device determines, based on the first indication information, that an MM-NAS connection needs to be established.

It should be noted that the first indication information may be implemented in a plurality of manners, including but not limited to an information element carried in the fifth message or the fifth message.

For example, the first indication information is an information element carried in the fifth message. If the first network element is an AMF, the first indication information indicates that the first NAS type to which the first NAS connection belongs is an MM-NAS. For another example, the first indication information is an information element carried in the fifth message. If the first network element is an SMF, the first indication information indicates that the first NAS type to which the first NAS connection belongs is an SM-NAS. For another example, the first indication information is the fifth message. For example, a protocol predefines that a fifth message between the terminal device and the network element of the first network element type (for example, an AMF) is a message #A, and a fifth message between the terminal device and a network element of a second network element type (for example, an SMF) is a message #B. If the fifth message is the message #A, it indicates that the first NAS type to which the first NAS connection belongs is an MM-NAS connection. If the fifth message is the message #B, it indicates that the first NAS type to which the first NAS connection belongs is an SM-NAS connection.

Specifically, that the first indication information indicates the first NAS type to which the first NAS connection belongs may also be understood as that the first indication information indicates the network element type to which the first network element belongs. For example, if the first network element is an AMF, the first indication information indicates that the first network element is an MM-NAS network element. For another example, if the first network element is an SMF, the first indication information indicates that a second network element is an SM-NAS network element.

For ease of description, an example in which the first indication information indicates the first NAS type to which the first NAS connection belongs is used below for description.

It should be noted that, in this embodiment, before the terminal device receives the fifth message from the first network element, the terminal device sends a second NAS security establishment request to the first network element through the first access network device. The method procedure shown in FIG. 8 further includes the following step:
S811: The terminal device sends a fourth message to the first access network device, in other words, the first access network device receives the fourth message from the terminal device.
S812: The first access network device determines the identifier of the first network element.
S813: The access network device forwards the second NAS security establishment request to the first network element.

For steps S811 to S813, refer to the descriptions of steps S511 to S513 in the communication method shown in FIG. 5. Details are not described herein again.

Further, in this embodiment, after receiving the fifth message, the terminal device may generate NAS security contexts respectively corresponding to a plurality of NAS connections. The method procedure shown in FIG. 8 further includes the following step:
S820: The terminal device generates the NAS security contexts respectively corresponding to the plurality of NAS connections.

For example, the terminal device generates a first NAS security context corresponding to the first NAS connection and a second NAS security context corresponding to a second NAS connection in response to the fifth message.

Specifically, that the terminal device generates the first NAS security context corresponding to the first NAS connection and the second NAS security context corresponding to the second NAS connection in response to the fifth message includes: The terminal device generates the first NAS security context corresponding to the first NAS connection based on the first NAS type, and generates the second NAS security context corresponding to the second NAS connection based on a second NAS type, where the first NAS security context is used to perform security protection on communication between the terminal device and the first network element, and the second NAS security context is used to perform security protection on communication between the terminal device and the second network element.

After the terminal device generates the NAS security contexts respectively corresponding to the plurality of NAS connections, the terminal device may perform security protection on a NAS connection establishment process by using the NAS contexts corresponding to the NAS connections. For example, in a process of establishing the second NAS connection between the terminal device and the second network element, the terminal device performs, based on the first NAS security context, security protection on a first NAS security establishment request used to request to establish the second NAS connection. The method procedure shown in FIG. 8 further includes the following step:
S830: The terminal device sends a sixth message to a second access network device, in other words, the second access network device receives the sixth message from the terminal device.

For example, the terminal device sends the sixth message to the second access network device, where the sixth message includes a first parameter and the first NAS security establishment request security-protected based on first NAS security context, and the first parameter is used by the second access network device to determine the second network element type to which the second network element belongs. Further, the second access network device may determine an identifier of the second network element based on the second network element type, and forward, to the second network element, the first NAS security establishment request security-protected based on the first NAS security context. In this case, the method procedure shown in FIG. 8 further includes the following step:
S831: The second access network device determines the identifier of the second network element.

For step S831, refer to the descriptions of step S531 in the communication method shown in FIG. 5. Details are not described herein again.

S832: The access network device forwards, to the second network element, the first NAS security establishment request security-protected based on the second NAS security context.

After receiving the first NAS security establishment request security-protected based on the second NAS security context, the second network element obtains the second NAS security context used to establish the second NAS connection.

In a possible implementation, the second network element obtains, from the first network element, the second NAS security context and/or a NAS primary security context used to generate the second NAS security context.

In another possible implementation, the second network element obtains, from the security network element, the second NAS security context and/or a NAS primary security context used to generate the second NAS security context.

A manner in which the second network element obtains the second NAS security context is described below with reference to specific examples (for example, descriptions of obtaining the second NAS security context by the second network element in Example 1 and Example 3 below). Details are not described herein again.

Optionally, the second network element may activate NAS security protection for the second NAS connection by using a second message. The method procedure shown in FIG. 8 further includes the following step:
S840: The second network element sends the second message to the terminal device, in other words, the terminal device receives the second message from the second network element.

For step S840, refer to the descriptions of step S540 in the communication method shown in FIG. 5. Details are not described herein again.

Specifically, after receiving the second message, the terminal device performs security verification on the second message based on the second NAS security context. The method procedure shown in FIG. 8 further includes the following step:
S850: The terminal device performs security verification on the second message based on the second NAS security context.

Specifically, after receiving the second message, the terminal device determines the second NAS type to which the second NAS connection belongs, determines the second NAS security context based on the second NAS type, and then performs security verification on the second message based on the second NAS security context.

That the terminal device performs security verification on the second message based on the first NAS security context includes: The terminal device performs decryption and/or integrity verification on the second message based on the first NAS security context.

In addition, in the communication method shown in FIG. 8, the terminal device may further determine, based on a first identifier carried in the second message and a second identifier received from the first network element, whether the second network element is an authorized network element, to prevent another unauthorized network element from establishing a NAS connection to the terminal device, thereby enhancing security. The first identifier is an identifier that is provided by the second network element and that is used to determine the second network element, and the second identifier is an identifier that is provided by the first network element (or the security network element) and that is used to determine the second network element.

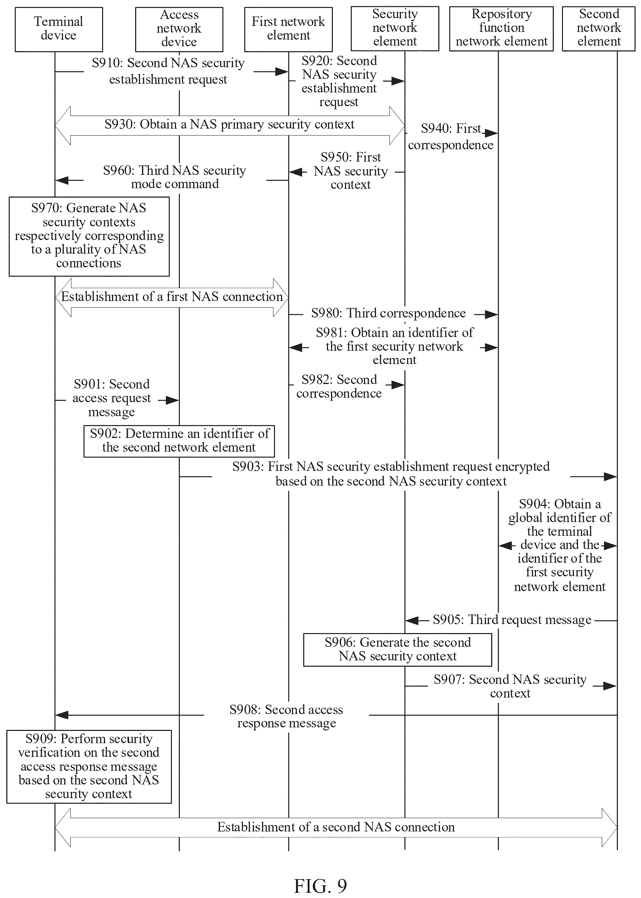

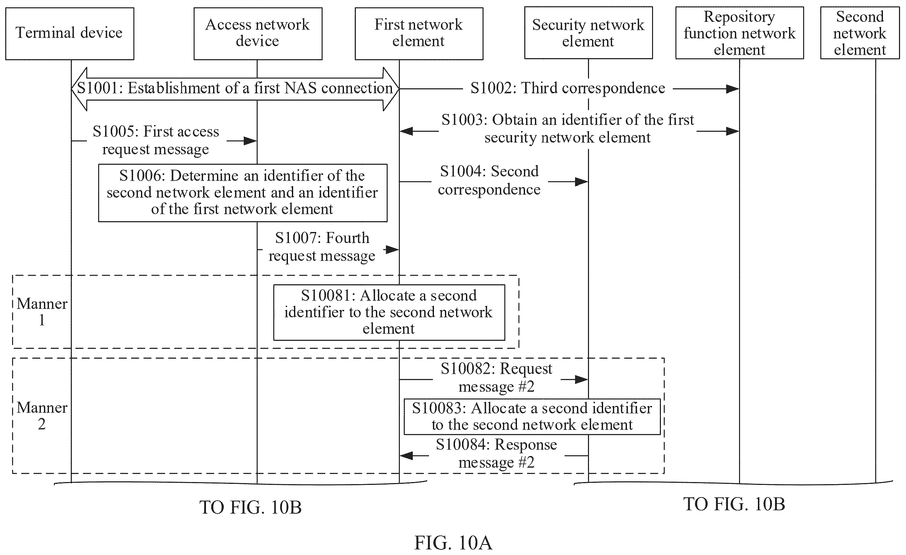

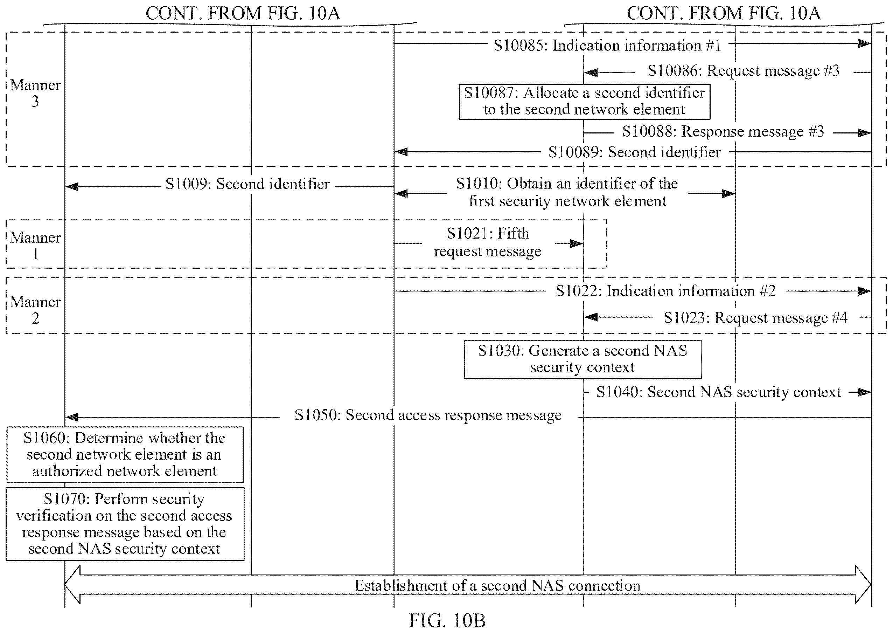

For ease of understanding, the following describes the communication manner shown in FIG. 8 with reference to Embodiment 3 and Example 4. The first access network device and the second access network device in FIG. 8 in Example 3 and Example 4 are a same device. FIG. 9 is a diagram of Example 3, and FIG. 10A and FIG. 10B are a diagram of Example 4.

FIG. 9 is a schematic flowchart of another communication method according to this application. The method includes the following steps.

S910: A terminal device sends a second NAS security establishment request to a first network element.

Specifically, the terminal device sends the second NAS security establishment request to the first network element through an access network device. Refer to steps S610 to S630 in the method procedure shown in FIG. 6. Details are not described herein again.

A difference from the communication method shown in FIG. 6 lies in that, in this embodiment, after receiving the second NAS security establishment request, the first network element may request a security network element to perform primary authentication on the terminal device. In other words, in this embodiment, a primary authentication procedure may be initiated by the security network element instead of the first network element.

It should be noted that the security network element in this embodiment is a network element used for authentication in a system, and includes but is not limited to a network element that can be used for authentication, such as an SEAF or an AUSF. In addition, it should be noted that, in this embodiment, the security network element and a core network element (for example, the first network element or a second network element) may be located in different network domains. For example, the security network element belongs to a first network, the core network element belongs to a second network, and the security network element and the core network element may communicate with each other through a security proxy network element. The first network may be a home network, and the second network may be a visited network.

Specifically, in this embodiment, the first network element may trigger, by forwarding the received second NAS security establishment request to the security network element, the security network element to perform primary authentication on the terminal device. The method procedure shown in FIG. 9 further includes the following step:
S920: The first network element sends the second NAS security establishment request to the security network element.

Specifically, when the second network element cannot obtain a first NAS security context, the first network element forwards the second NAS security establishment request to the security network element, to request the security network element to perform primary authentication on the terminal device.

S930: The terminal device and the security network element obtain a NAS primary security context.

In a possible implementation, after primary authentication is completed between the terminal device and the security network element, the NAS primary security context is generated on a terminal device side and a security network element side.

In a possible implementation, primary authentication is completed between the terminal device and a network element #1, the primary authentication procedure is forwarded by the security network element, the terminal device generates a NAS primary security context, and the security network element obtains the NAS primary security context from the network element #1.

Optionally, the security network element may be an SEAF, and the NAS primary security context may be Kseaf; or the security network element may be an AUSF, and the NAS primary security context may be Kausf; or the security network element may be a core network element, and the NAS primary security context may be Knas.

It should be understood that, for related descriptions of the actions of the terminal device in the primary authentication procedure in this embodiment, refer to descriptions of the actions on the terminal device side in the primary authentication procedure in the existing protocol. Similarly, for related descriptions of the actions of the security network element in the primary authentication procedure in this embodiment, refer to descriptions of actions on an SEAF side in a primary authentication procedure in an existing protocol. The primary authentication procedure between the terminal device and the security network element is not described in detail in this embodiment.

In addition, it should be noted that, in this embodiment, a procedure in which the terminal device and the security network element obtain the NAS primary security context may be triggered in another manner (for example, triggered by a management network element). Therefore, the procedure in which the terminal device and the security network element obtain the NAS primary security context may be performed before the terminal device sends the second NAS security establishment request to the first network element. In other words, a sequence of performing step S930 and steps S910 and S920 is not limited.

S940: The security network element sends a first correspondence to a repository function network element.

The repository function network element is a network element that provides a storage function in a system, and includes but is not limited to a UDM, a UDR, or the like. The first correspondence is a correspondence between a global identifier of at least one terminal device and an identifier of the security network element.

It should be understood that the security network element may receive a NAS security establishment request initiated by at least one terminal device, and the security network element may send a correspondence between a global identifier of the at least one terminal device and the identifier of the security network element to the repository function network element, and the repository function network element stores the correspondence.

For example, the security network element separately receives NAS security establishment requests initiated by a terminal device #1, a terminal device #2, and a terminal device #3, and the security network element may send correspondences between global identifiers of the terminal device #1, the terminal device #2, and the terminal device #3 and the identifier of the security network element to the repository function network element, and the repository function network element stores the correspondences. The security network element may sequentially receive NAS security establishment requests initiated by different terminal devices, and the security network element may sequentially send correspondences between global identifiers of the different terminal devices and the identifier of the security network element to the repository function network element; or the security network element may sequentially receive NAS security establishment requests initiated by different terminal devices, and the security network element uniformly sends correspondences between global identifiers of the different terminal devices and the identifier of the security network element to the repository function network element. In this embodiment, how the security network element sends the correspondence between the global identifier of the at least one terminal device and the identifier of the security network element to the repository function network element is not limited.

For example, the security network element sends a request message #1 to the repository function network element, where the request message #1 carries the first correspondence between the global identifier of the terminal device and the identifier of the security network element, and the request message #1 is used to request the repository function network element to store the first correspondence.

For ease of understanding, a possible form of the first correspondence is described with reference to Table 3.

**Table 3**

| UE global ID (SUPI) | Security network element (SEAF) ID |
|---|---|
| Abc3 | 45b2 |
| Abc2 | 45b2 |
| Abc1 | 45b2 |

It can be learned from Table 3 that the security network element whose identifier is 45b2 completes primary authentication with the terminal devices whose global identifiers are Abc3, Abc2, and Abc1.

In addition, it should be noted that there may be a plurality of security network elements in the system. In this case, the repository function network element may receive and store correspondences from different security network elements.

For example, the system includes a security network element #1 and a security network element #2, the security network element #1 sends a first correspondence #1 to the repository function network element, and the security network element #2 sends a first correspondence #2 to the repository function network element. In this case, correspondences, locally stored by the repository function network element, between global identifiers of terminal devices and identifiers of security network elements may be shown in Table 4 below.

**Table 4**

| UE global ID (SUPI) | Security network element (SEAF) ID |
|---|---|
| Abc3 | 45b2 |
| Abc2 | 45b2 |
| Abc1 | 45b2 |
| Abc4 | 45b1 |
| Abc5 | 45b1 |
| Abc6 | 45b1 |

It can be learned from Table 4 that the security network element whose identifier is 45b2 separately completes primary authentication with the terminal devices whose global identifiers are Abc3, Abc2, and Abc1, and the security network element whose identifier is 45b1 separately completes primary authentication with the terminal devices whose global identifiers are Abc4, Abc5, and Abc6.

For ease of description, the following uses an example in which the system includes a security network element for description.

Further, after the primary authentication succeeds, the security network element generates a first NAS security context, and sends the first NAS security context to the first network element. The method procedure shown in FIG. 9 further includes the following step:
S950: The security network element sends the first NAS security context to the first network element.

Specifically, the security network element sends a message #6 to the first network element, where the message #6 includes the global identifier of the terminal device, the first NAS security context, and a security capability description of the terminal device. For a manner in which the security network element generates the first NAS security context, refer to the manner in which the first network element generates the first NAS security context in the communication method shown in FIG. 6. Details are not described again in this embodiment.

After the first network element receives the first NAS security context from the security network element, the first network element sends a third NAS security mode command to the terminal device, and negotiates with the terminal device about information required for generating the first NAS security context. In this case, the method procedure shown in FIG. 9 further includes the following step:
S960: The first network element sends the third NAS security mode command to the terminal device.

The third NAS security mode command is equivalent to the fifth message sent by the first network element to the terminal device in step S810 in the communication method shown in FIG. 8.

Specifically, the third NAS security mode command includes a NAS identifier #1, first indication information, and the security capability description of the terminal device. For descriptions of the information carried in the third NAS security mode command, refer to the descriptions of the information carried in the first NAS security mode command shown in step S650 in the communication method shown in FIG. 6. Details are not described again in this embodiment. A difference lies in that, in this embodiment, the third NAS security mode command is used to trigger the terminal device to generate different NAS security contexts for different NAS types, while in the communication method shown in FIG. 6, the first NAS security mode command is used to trigger the terminal device to generate the first NAS security context for the first NAS connection.

S970: The terminal device generates NAS security contexts respectively corresponding to a plurality of NAS connections.

In this embodiment, after receiving the third NAS security mode command, the terminal device may generate a NAS security context for a NAS type based on the security capability description of the terminal device and a derivation algorithm.

Specifically, the derivation algorithm may be a NAS security context generation mechanism obtained by the terminal device and the first network element through NAS SMC negotiation.

For example, the security capability description of the terminal device includes type information of the terminal device and a security capability seed of the terminal device. The type information of the terminal device indicates a type of the terminal device. For example, when the terminal device is a terminal device compatible with a distributed NAS capability, a type of the terminal device is a terminal device supporting distributed NAS. The security capability seed of the terminal device may be any random number, and is a value implanted during subscription of the terminal device. For example, the security capability seed of the terminal device may be 0x11.

In a possible implementation, the terminal device is a terminal device compatible with a distributed NAS capability, and a derivation algorithm of the terminal device is shown in Table 5, where Hash () is a hash function, and ⊕ is an exclusive OR operation.

**Table 5**

| NAS type | UE security capability seed | UE global ID (SUPI) | NAS type key (a generation example) |
|---|---|---|---|
| MM-NAS | 0x11 | Abc3 | Hash (0x11⊕Abc3⊕1) |
| SM-NAS | 0x11 | Abc3 | Hash (0x11⊕Abc3⊖2) |
| PCF-NAS | 0x11 | Abc3 | Hash (0x11⊖Abc3⊖3) |

In another possible implementation, if the terminal device is a conventional terminal device (legacy device) (or a terminal device that is not compatible with a distributed NAS capability, such as a compatible device or an old device), all NAS type keys may be the same, and a derivation algorithm of the terminal device is shown in Table 6, where Hash () is a hash function, and Θ is an exclusive OR operation.

**Table 6**

| NAS type | UE security capability seed | UE global ID (SUPI) | NAS type key (a generation example) |
|---|---|---|---|
| MM-NAS | 0x12 | Abc1 | Hash (0x12ΘAbc1) |
| SM-NAS | 0x12 | Abc1 | Hash (0x12ΘAbc1) |
| PCF-NAS | 0x12 | Abc1 | Hash (0x12ΘAbc1) |

It should be noted that Table 5 and Table 6 are merely examples, and do not constitute any limitation on the protection scope of this application. Content of the security capability description of the terminal device is not limited, provided that NAS security contexts corresponding to a plurality of NAS types can be generated at a time based on the security capability description of the terminal device.

After the first network element and the terminal device generate the first NAS security context, the first NAS connection may be established between the terminal device and the first network element based on the first NAS security context.

In addition, the first network element may record, in the storage network element, a third correspondence between a temporary identifier and a global identifier of at least one terminal device. In this case, the method procedure shown in FIG. 9 further includes the following step:
S980: The first network element sends the third correspondence to the repository function network element.

The third correspondence is a correspondence between a temporary identifier and a global identifier of at least one terminal device.

It should be understood that the first network element may establish a NAS connection to at least one terminal device, and the first network element may send a correspondence between a temporary identifier and a global identifier of the at least one terminal device to the repository function network element, and the repository function network element stores the correspondence.

For example, the first network element separately establishes NAS connections to a terminal device #1, a terminal device #2, and a terminal device #3, the first network element may send correspondences between temporary identifiers and global identifiers of the terminal device #1, the terminal device #2, and the terminal device #3 to the repository function network element, and the repository function network element stores the correspondences.

For example, the first network element sends a message #7 to the repository function network element, where the message #7 carries the third correspondence between a temporary identifier of a terminal device and a global identifier of the terminal device, and the message #7 is used to request the repository function network element to store the third correspondence.

As described above, the repository function network element locally stores the first correspondence between a global identifier of a terminal device and an identifier of a security network element, and after receiving the third correspondence from the first network element, the repository function network element may locally store the correspondence between a temporary identifier of a terminal device, a global identifier of the terminal device, and an identifier of a security network element.

For ease of understanding, a possible form of the correspondence, locally stored by the repository function network element, between a temporary identifier of a terminal device, a global identifier of the terminal device, and an identifier of a security network element is described with reference to Table 7.

**Table 7**

| UE temporary ID (one or more) | UE global ID (SUPI) | Security network element ID |
|---|---|---|
| 001, 002 | Abc3 | 45b2 |
| 011 | Abc2 | 45b2 |
| 112, 131, 122, 141 | Abc1 | 45b2 |

In addition, in this embodiment, the first network element may query the repository function network element for a security network element by using a global identifier of a terminal device. The method procedure shown in FIG. 9 further includes the following step:
S981: The first network element obtains an identifier of a security network element from the repository function network element.

Specifically, the first network element sends a message #8 to the repository function network element, where the message #8 includes a global identifier of a terminal device, and the message #8 is used to request the repository function network element to provide an identifier of a security network element corresponding to the global identifier of the terminal device. After receiving the message #8, the repository function network element determines, based on the global identifier of the terminal device included in the message #8 and the locally stored first correspondence between a global identifier of a terminal device and an identifier of a security network element, the identifier of the security network element corresponding to the global identifier of the terminal device, and sends a message #9 to the first network element, where the message #9 includes the identifier of the security network element.

Further, after obtaining the identifier of the security network element, the first network element may send security capability information of the terminal device to the security network element. The method procedure shown in FIG. 9 further includes the following step:
S982: The first network element sends a second correspondence to the security network element.

Specifically, the second correspondence includes a correspondence between the global identifier of the terminal device and the security capability description of the terminal device, so that the security network element can locally record the correspondence between the global identifier of the terminal device and the security capability description of the terminal device.

In addition, in this embodiment, after the first NAS connection is established between the terminal device and the first network element, the terminal device may further establish a NAS connection to another core network element. For ease of understanding, an example in which the terminal device establishes a second NAS connection to the second network element is used for description.

If the second NAS connection needs to be established, the method procedure shown in FIG. 9 further includes the following step:
S901: The terminal device sends a second access request message to the access network device.

Specifically, the second access request message includes the temporary identifier of the terminal device, a first parameter, and a first NAS security establishment request encrypted based on a second NAS security context, the first NAS security establishment request is used to request to establish the second NAS connection between the terminal device and the second network element, and the first parameter is used by the access network device to determine the second network element.

Optionally, the second access request message further includes second indication information, and the second indication information indicates that the second NAS connection is an N^{th} NAS connection, where N is an integer greater than 1. For example, if the second NAS connection between the terminal device and the second network element is a 2^{nd} NAS connection, N=2.

It should be understood that, in this embodiment, because the terminal device generates different NAS security contexts based on NAS connections of different NAS types, when the terminal device needs to establish the second NAS connection to the second network element, the terminal device may send the second access request message to the access network device, and the second access request message carries the first NAS security establishment request encrypted based on the second NAS security context.

S902: The access network device determines an identifier of the second network element.

For a specific determining manner, refer to the descriptions of determining the identifier of the second network element by the access network device in the communication method shown in FIG. 6. Details are not described herein again.

S903: The access network device sends, to the second network element, the first NAS security establishment request encrypted based on the second NAS security context.

Specifically, the access network device sends a message #10 to the second network element, where the message #10 includes the temporary identifier of the terminal device and the first NAS security establishment request encrypted based on the second NAS security context.

In this embodiment, after receiving the first NAS security establishment request encrypted based on the second NAS security context, the second network element may query the global identifier of the terminal device and the identifier of the security network element from the repository function network element by using the message #10 that includes the temporary identifier of the terminal device.

S904: The second network element obtains the global identifier of the terminal device and the identifier of the security network element from the repository function network element.

Specifically, the second network element sends a query message to the repository function network element, where the query message includes the temporary identifier of the terminal device, and the query message is used to query the identifier of the security network element. After receiving the query message, the repository function network element may determine the global identifier of the terminal device based on the temporary identifier of the terminal device that is carried in the query message, and the locally stored second correspondence between the temporary identifier of the terminal device and the global identifier of the terminal device.

Further, the repository function network element may determine the identifier of the security network element of the terminal device based on the global identifier of the terminal device and the locally stored first correspondence between the global identifier of the terminal device and the identifier of the security network element, and send the identifier of the security network element and the global identifier of the terminal device to the second network element by using a response message.

Further, after the second network element obtains the identifier of the security network element and the global identifier of the terminal device, the second network element may request the security network element to generate the second NAS security context.

S905: The second network element sends a third request message to the security network element.

Specifically, the second network element sends the third request message to the security network element, where the third request message includes the global identifier of the terminal device. The third request message is used to request the security network element to provide the second NAS security context.

S906: The security network element generates the second NAS security context.

Specifically, after receiving the third request message, the security network element determines a security capability description of the terminal device based on the global identifier of the terminal device and the locally stored correspondence between the global identifier of the terminal device and the security capability description of the terminal device.

Further, the security network element generates the second NAS security context based on the NAS primary security context and the security capability description of the terminal device. For example, the security network element derives the second NAS security context based on a method for generating a security context on a terminal device side, and sends the second NAS security context to the second network element.

S907: The security network element sends the second NAS security context to the second network element.

Specifically, the security network element sends a response message #4 to the second network element, where the response message #4 includes the global identifier of the terminal device and the second NAS security context.

S908: The second network element sends a second access response message to the terminal device.

The second access response message is equivalent to the second message sent by the second network element to the terminal device in step S840 in the communication method shown in FIG. 8.

Specifically, the second access response message includes second indication information, and the second indication information indicates a NAS type to which the second NAS connection belongs.

In a possible implementation, the second indication information is indication information explicitly carried in the second access response message.

In another possible implementation, the second indication information is indication information implicitly carried in the second access response message. For example, the second access response message implicitly indicates the NAS type of the second NAS connection. For example, a name of the second access response message may be a session establishment success response, and the message name indicates that the NAS type to which the second NAS connection belongs is SM-NAS.

Optionally, the second access response message further includes a first identifier, and the first identifier is used to determine the second network element.

S909: The terminal device performs security verification on the second access response message based on the second NAS security context.

Specifically, after receiving the second access response message, the terminal device determines the second NAS security context based on the NAS type to which the to-be-established second NAS connection belongs, and performs security verification on the second access response message based on the second NAS security context.

It should be understood that, when the second NAS connection is successfully established, another NAS connection establishment procedure may continue. For another NAS connection establishment procedure, refer to the second NAS connection procedure. Details are not described herein again.

It can be learned from the communication method shown in FIG. 6 that the first network element may check permission of the second network element. This application further provides a communication method, to prevent an unauthorized second network element to establish a NAS connection to a terminal device in the communication procedures shown in FIG. 8. For ease of understanding, the following provides descriptions with reference to FIG. 10A and FIG. 10B.

FIG. 10A and FIG. 10B are a schematic flowchart of still another communication method according to an embodiment of this application. The method includes the following steps:
S1001: Establish a first NAS connection between a terminal device and a first network element.

Specifically, for descriptions of S1001, refer to the descriptions of step S910 to step S970 in the embodiment shown in FIG. 9. Details are not described herein again.

S1002: The first network element sends a third correspondence to a repository function network element.

Specifically, for descriptions of S1002, refer to the descriptions of step S980 in the embodiment shown in FIG. 9. Details are not described herein again.

S1003: The first network element obtains an identifier of a security network element from the repository function network element.

Specifically, for descriptions of S1003, refer to the descriptions of step S981 in the embodiment shown in FIG. 9. Details are not described herein again.

S1004: The first network element sends a second correspondence to the security network element.

Specifically, for descriptions of S1004, refer to the descriptions of step S982 in the embodiment shown in FIG. 9. Details are not described herein again.

S1005: The terminal device sends a second access request message to an access network device.

Specifically, for descriptions of S1005, refer to the descriptions of step S901 in the embodiment shown in FIG. 9. Details are not described herein again.

S1006: The access network device determines an identifier of a second network element and an identifier of the first network element.

Specifically, for descriptions of S1006, refer to the descriptions of step S630 in the embodiment shown in FIG. 9. Details are not described herein again.

In this embodiment, after the access network device determines the identifier of the second network element and the identifier of the first network element, a difference from the embodiment shown in FIG. 9 is that the access network device does not directly send, to the second network element, a first NAS security establishment request encrypted based on a second NAS security context, but sends a fourth request message to the first network element, to request the first network element to provide the second NAS security context for the second network element. In this case, the method procedure shown in FIG. 10A and FIG. 10B further includes the following step:
S1007: The access network device sends the fourth request message to the first network element.

The fourth request message is used to request the first network element to provide the second NAS security context for the second network element. Specifically, the fourth request message includes a temporary identifier of the terminal device, the identifier of the second network element, and the first NAS security establishment request encrypted based on the second NAS security context.

Optionally, the fourth request message further includes second indication information, and the second indication information indicates a NAS type to which a second NAS connection belongs. Optionally, the fourth request message further includes a first identifier, and the first identifier is used to determine that a network element that currently needs to establish a NAS connection is the second network element.

Further, in this embodiment, after receiving the fourth request message, the first network element may allocate a second identifier to the second network element based on the fourth request message, or the first network element may further request the security network element to allocate the second identifier to the second network element, or the first network element may further indicate the second network element to request the security network element to allocate the second identifier to the second network element, where the second identifier is used to determine the second network element. In other words, in this embodiment, the second identifier is allocated to the second network element in the following manners:
Manner 1: The first network element allocates the second identifier to the second network element. In the case shown in Manner 1, the method procedure shown in FIG. 10A and FIG. 10B further includes the following step:
S10081: The first network element allocates the second identifier to the second network element.

Specifically, for a manner in which the first network element allocates the second identifier to the second network element, refer to the manner in which the first network element allocates the second identifier to the second network element in the communication method shown in FIG. 9. Details are not described herein again. Manner 2: The security network element allocates the second identifier to the second network element. In the case shown in Manner 2, the method procedure shown in FIG. 10A and FIG. 10B further includes the following steps.

S10082: The first network element sends a request message #2 to the security network element. The request message #2 is used to request the security network element to allocate the second identifier to the second network element.

S10083: The security network element allocates the second identifier to the second network element. Specifically, after receiving the request message #2, the security network element allocates the second identifier to the second network element in response to the request message #2.

S10084: The security network element sends a response message #2 to the first network element. The response message #2 includes the second identifier.

Optionally, after successfully receiving the second identifier, the first network element may notify, by using a notification message, the security network element that the second identifier has been successfully received.

Manner 3: The first network element indicates the second network element to request the security network element to allocate the second identifier to the second network element. In the case shown in Manner 3, the method procedure shown in FIG. 10A and FIG. 10B further includes the following steps.

S10085: The first network element sends indication information #1 to the second network element. The indication information #1 indicates the second network element to request the security network element to allocate the second identifier to the second network element.

Specifically, the indication information #1 includes the identifier of the security network element and the identifier of the terminal device. It should be understood that step S10087 should be performed after step S1010, that is, after the first network element obtains the identifier of the security network element.

S10086: The second network element sends a request message #3 to the security network element. The request message #3 is used to request the security network element to allocate the second identifier to the second network element.

S10087: The security network element allocates the second identifier to the second network element. Specifically, after receiving the request message #3, the security network element allocates the second identifier to the second network element in response to the request message #3.

S10088: The security network element sends a response message #3 to the second network element. The response message #3 includes the second identifier.

Optionally, after successfully receiving the second identifier, the second network element may notify, by using a notification message, the security network element that the second identifier has been successfully received.

S10089: The second network element sends the second identifier to the first network element.

In any one of Manner 1 to Manner 3, the first network element may obtain the second identifier. Further, to help the terminal device determine, based on the second identifier, whether the second network element subsequently sending the NAS SMC is an authorized core network element, the first network element sends the first identifier to the terminal device by using the first NAS connection between the terminal device and the first network element. In this case, the method procedure shown in FIG. 10A and FIG. 10B further includes the following step:
S1009: The first network element sends the second identifier to the terminal device. In addition, in this embodiment, after receiving the fourth request message, the first network element may request the security network element to provide the second NAS security context for the second network element. The method procedure shown in FIG. 10A and FIG. 10B further includes the following step:
S1010: The first network element obtains the identifier of the security network element from the repository function network element.

Specifically, the first network element sends a query message to the repository function network element, where the query message includes the temporary identifier of the terminal device, and the query message is used to query the identifier of the security network element. After receiving the query message, the repository function network element may determine the global identifier of the terminal device based on the temporary identifier of the terminal device that is carried in the query message, and the locally stored second correspondence between the temporary identifier of the terminal device and the global identifier of the terminal device.

Further, the repository function network element may determine the identifier of the security network element of the terminal device based on the global identifier of the terminal device and the locally stored first correspondence between the global identifier of the terminal device and the identifier of the security network element, and send the identifier of the security network element and the global identifier of the terminal device to the first network element by using a response message.

For example, after obtaining the identifier of the security network element, the first network element may request the security network element to provide the second NAS security context for the second network element, or the first network element may send the identifier of the security network element to the second network element, and the second network element requests the security network element to provide the second NAS security context for the second network element. In other words, in this embodiment, the second NAS security context is provided for the second network element in the following two manners:
Manner 1: The first network element requests the security network element to provide the second NAS security context for the second network element. In the case shown in Manner 1, the method procedure shown in FIG. 10A and FIG. 10B further includes the following step:
S1021: The first network element sends a fifth request message to the security network element.

Specifically, the first network element sends the fifth request message to the security network element, where the fifth request message includes the global identifier of the terminal device, the identifier of the second network element, and the first NAS security establishment request encrypted based on the second NAS security context. The fifth request message is used to request to provide the second NAS security context for the second network element.

In addition, it should be noted that, if the first network element requests the security network element to allocate the second identifier to the second NAS, the request message #2 in step S10082 and the fifth request message in step S1021 may be a same message, that is, by using the fifth request message, the first network element may simultaneously request the security network element to provide the second NAS security context for the second network element and allocate the second identifier to the second NAS.

Manner 2: The second network element requests the security network element to provide the second NAS security context for the second network element. In the case shown in Manner 2, the method procedure shown in FIG. 10A and FIG. 10B further includes the following steps.

S1022: The first network element sends indication information #2 to the second network element. The indication information #2 indicates the second network element to request the security network element to provide the second NAS security context for the second network element.

Specifically, the indication information #2 includes the identifier of the security network element and the identifier of the terminal device.

In addition, it should be noted that, if the first network element indicates the second network element to request the security network element to allocate the second identifier to the second NAS, the indication information #1 in step S10085 and the indication information #2 in step S1022 may be a same message, that is, by using the indication information #1, the first network element may simultaneously indicate the second network element to request the security network element to provide the second NAS security context for the second network element and allocate the second identifier to the second NAS.

S1023: The second network element sends a request message #4 to the security network element.

Specifically, the second network element sends the request message #4 to the security network element, where the request message #4 includes the global identifier of the terminal device, the identifier of the second network element, and the first NAS security establishment request encrypted based on the second NAS security context. The request message #4 is used to request to provide the second NAS security context for the second network element.

Further, after receiving the fifth request message of the first network element or the request message #4 of the second network element, the security network element generates the second NAS security context for the second network element. The method procedure shown in FIG. 10A and FIG. 10B further includes the following steps:
S1030: The security network element generates the second NAS security context.

Specifically, the security network element determines a security capability description of the terminal device based on the global identifier of the terminal device and the second correspondence, and generates the second NAS security context based on the security capability description of the terminal device and the NAS type to which the second NAS connection belongs.

S1040: The security network element sends the second NAS security context to the second network element.

S1050: The second network element sends a second access response message to the terminal device.

Specifically, for the information included in the second access response message, refer to the descriptions of the information included in the second access response message shown in step S908 in the communication method shown in FIG. 9. Details are not described herein again.

S1060: The terminal device determines whether the second network element is an authorized network element.

Specifically, after receiving the second access response message, the terminal device may determine, based on the first identifier carried in the second access response message and the second identifier received by the terminal device from the security network element, whether the second network element that sends a second NAS security mode command is a network element authorized by the first network element (or the security network element). If the second network element is an authorized network element, the terminal device decrypts the second access response message to establish the second NAS connection. If the second network element is not an authorized network element, the terminal device refuses to establish the second NAS connection to the second network element.

In this embodiment, a case in which the second network element is an authorized network element and the second NAS connection is established is mainly considered. In this case, the method procedure shown in FIG. 10A and FIG. 10B further includes the following step:
S1070: The terminal device performs security verification on the second access response message based on the second NAS security context.

Specifically, for descriptions of S 1070, refer to the descriptions of step S909 in the embodiment shown in FIG. 9. Details are not described herein again.

In the communication method shown in FIG. 10A and FIG. 10B, the access network device sends the second NAS security establishment request to the first network element (or the security network element) that has established a security connection, and the first network element (or the security network element) allocates an identifier to the second network element, to assist the terminal device in determining whether the second network element is a trusted network element, so as to prevent an unauthorized second network element from establishing a NAS connection to the terminal device, thereby further enhancing security.

It should be understood that sequence numbers of the foregoing processes do not mean execution sequences. The execution sequences of the processes should be determined based on functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined to form a new embodiment based on an internal logical relationship thereof.

It should be further understood that, in some of the foregoing embodiments, a device (for example, a terminal device, an access network device, a first network element, or a second network element) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, a terminal device, an access network device, a first network element, or a second network element) may also be implemented by a component (for example, a chip or a circuit) of the device.

The communication methods provided in embodiments of this application are described in detail above with reference to FIG. 5 to FIG. 10A and FIG. 10B. The foregoing communication method is mainly described from a perspective of interaction between protocol layers of the terminal device. It may be understood that, to implement the foregoing functions, the terminal device includes corresponding hardware structures and/or software modules for performing the functions.

A person skilled in the art may be aware that, in combination with units and algorithm steps of the examples described in embodiments disclosed in this specification, this application may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

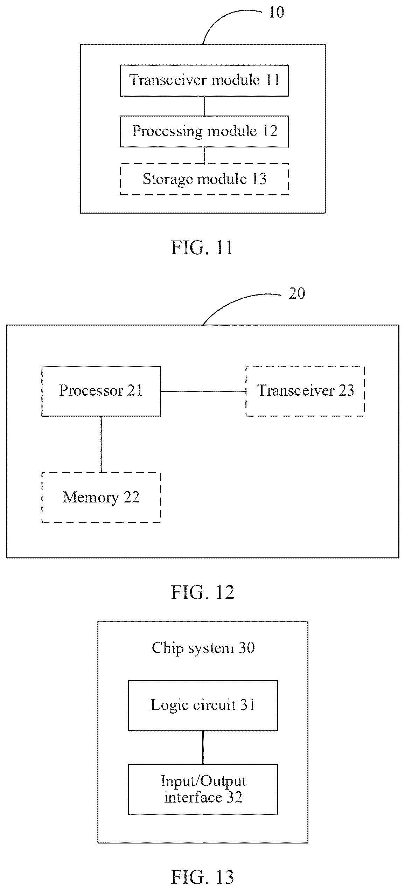

The following describes in detail communication apparatuses provided in this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit device or a receive device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 11 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, for the apparatus to implement an action of the device in the foregoing method embodiments.

In a design, the apparatus 10 may correspond to the terminal device in the foregoing method embodiment, or may be a component (for example, a chip) of the terminal device.

The apparatus 10 may implement corresponding steps or procedures performed by the terminal device in the foregoing method embodiment. The transceiver module 11 may be configured to perform receiving and sending related operations of the terminal device in the foregoing method embodiment, and the processing module 12 may be configured to perform a processing related operation of the terminal device in the foregoing method embodiment.

In a possible implementation, the transceiver module 11 is configured to receive a first message from a first network element through a first access network device; the processing module 12 is configured to generate a first NAS security context corresponding to a first NAS connection in response to the first message; and the transceiver module 11 is further configured to send, to a second network element through a second access network device, a first NAS security establishment request security-protected based on the first NAS security context, where the first NAS security establishment request is used to request to establish a second NAS connection between the terminal device and the second network element. The first access network device and the second access network device are a same device or different devices.

In another possible implementation, the transceiver module 11 is configured to receive a fifth message from a first network element through a first access network device, where the fifth message is used to activate NAS security protection for a NAS connection between the terminal device and a core network element; the processing module 12 is configured to generate a first NAS security context corresponding to a first NAS connection and a second NAS security context corresponding to a second NAS connection in response to the fifth message; and the transceiver module 11 is further configured to send, to a second network element through a second access network device, a first NAS security establishment request security-protected based on the second NAS security context, where the first NAS security establishment request is used to request to establish the second NAS connection between the terminal device and the second network element. The first access network device and the second access network device are a same device or different devices.

When the apparatus 10 is configured to perform the method in FIG. 5, the transceiver module 11 may be configured to perform steps of receiving and sending information in the method, for example, steps S510, S511, S530, and S540; and the processing module 12 may be configured to perform a processing step in the method, for example, steps S520 and S550.

When the apparatus 10 is configured to perform the method in FIG. 6, the transceiver module 11 may be configured to perform steps of receiving and sending information in the method, for example, steps S610, S640, S650, S670, and S604; and the processing module 12 may be configured to perform a processing step in the method, for example, step S605.

When the apparatus 10 is configured to perform the method in FIG. 7, the transceiver module 11 may be configured to perform steps of receiving and sending information in the method, for example, steps S720, S760, and S770; and the processing module 12 may be configured to perform a processing step in the method, for example, steps S780 and S790.

When the apparatus 10 is configured to perform the method in FIG. 8, the transceiver module 11 may be configured to perform steps of receiving and sending information in the method, for example, steps S810, S811, S830, and S840; and the processing module 12 may be configured to perform a processing step in the method, for example, steps S820 and S850.

When the apparatus 10 is configured to perform the method in FIG. 9, the transceiver module 11 may be configured to perform steps of receiving and sending information in the method, for example, steps S910, S960, S901, and S908; and the processing module 12 may be configured to perform a processing step in the method, for example, steps S970 and S909.

When the apparatus 10 is configured to perform the method in FIG. 10A and FIG. 10B, the transceiver module 11 may be configured to perform steps of receiving and sending information in the method, for example, steps S1005, S1009, and S1050; and the processing module 12 may be configured to perform a processing step in the method, for example, steps S1060 and S1070.

It should be understood that specific processes in which the units perform the foregoing corresponding steps are described in detail in the foregoing method embodiments. For brevity, details are not described herein again.

In another design, the apparatus 10 may correspond to the access network device in the foregoing method embodiment, or may be a component (for example, a chip) of the access network device.

The apparatus 10 may implement corresponding steps or procedures performed by the access network device in the foregoing method embodiment. The transceiver module 11 may be configured to perform receiving and sending related operations of the access network device in the foregoing method embodiment, and the processing module 12 may be configured to perform a processing related operation of the access network device in the foregoing method embodiment.

In a possible implementation, the transceiver module 11 is configured to receive a third message from a terminal device, where the third message includes a first parameter and a first NAS security establishment request security-protected based on a first NAS security context, and the first NAS security establishment request is used to request to establish a second NAS connection between the terminal device and a first core network element; the processing module 12 is configured to determine a second network element type based on the first parameter, where the second network element type represents a type of the first core network element; the processing module 12 is further configured to determine an identifier of a second network element based on the second network element type; and the transceiver module 11 is further configured to send, to the second network element, the first NAS security establishment request security-protected based on the first NAS security context.

In another possible implementation, the transceiver module 11 is configured to receive a sixth message from a terminal device, where the sixth message includes a first parameter and a first NAS security establishment request security-protected based on a second NAS security context, and the first NAS security establishment request is used to request to establish a second NAS connection between the terminal device and a first core network element; the processing module 12 is configured to determine a second network element type based on the first parameter, where the second network element type represents a type of the first core network element; the processing module 12 is further configured to determine an identifier of a second network element based on the second network element type; and the transceiver module 11 is further configured to send, to the second network element, the first NAS security establishment request security-protected based on the second NAS security context.

When the apparatus 10 is configured to perform the method in FIG. 5, the transceiver module 11 may be configured to perform steps of receiving and sending information in the method, for example, steps S511, S513, S530, and S532; and the processing module 12 may be configured to perform a processing step in the method, for example, steps S520 and S550.

When the apparatus 10 is configured to perform the method in FIG. 6, the transceiver module 11 may be configured to perform steps of receiving and sending information in the method, for example, steps S610, S630, S670, and S690; and the processing module 12 may be configured to perform a processing step in the method, for example, step S605.

When the apparatus 10 is configured to perform the method in FIG. 7, the transceiver module 11 may be configured to perform steps of receiving and sending information in the method, for example, steps S720 and S740; and the processing module 12 may be configured to perform a processing step in the method, for example, step S730.

When the apparatus 10 is configured to perform the method in FIG. 8, the transceiver module 11 may be configured to perform steps of receiving and sending information in the method, for example, steps S811, S813, S830, and S832; and the processing module 12 may be configured to perform a processing step in the method, for example, steps S820 and S850.

When the apparatus 10 is configured to perform the method in FIG. 9, the transceiver module 11 may be configured to perform steps of receiving and sending information in the method, for example, steps S901 and S903; and the processing module 12 may be configured to perform a processing step in the method, for example, step S902.

When the apparatus 10 is configured to perform the method in FIG. 10A and FIG. 10B, the transceiver module 11 may be configured to perform steps of receiving and sending information in the method, for example, steps S1005 and S1107; and the processing module 12 may be configured to perform a processing step in the method, for example, step S1006.

It should be understood that specific processes in which the units perform the foregoing corresponding steps are described in detail in the foregoing method embodiments. For brevity, details are not described herein again.

In still another design, the apparatus 10 may correspond to the first network element in the foregoing method embodiment, or may be a component (for example, a chip) of the first network element.

The apparatus 10 may implement corresponding steps or procedures performed by the first network element in the foregoing method embodiment. The transceiver module 11 may be configured to perform receiving and sending related operations of the first network element in the foregoing method embodiment, and the processing module 12 may be configured to perform a processing related operation of the first network element in the foregoing method embodiment.

In a possible implementation, the transceiver module 11 is configured to receive a second NAS security establishment request, where the second NAS security establishment request is used to request to establish a first NAS connection between a terminal device and the first network element; the processing module 12 is configured to obtain a first NAS security context corresponding to the first NAS connection in response to the second NAS security establishment request; and the transceiver module 11 is further configured to perform security protection on communication with the terminal device based on the first NAS security context.

When the apparatus 10 is configured to perform the method in FIG. 5, the transceiver module 11 may be configured to perform steps of receiving and sending information in the method, for example, steps S513 and S510; and the processing module 12 may be configured to perform a processing step in the method.

When the apparatus 10 is configured to perform the method in FIG. 6, the transceiver module 11 may be configured to perform steps of receiving and sending information in the method, for example, steps S630, S650, S601, and S602; and the processing module 12 may be configured to perform a processing step in the method, for example, steps S640 and S660.

When the apparatus 10 is configured to perform the method in FIG. 7, the transceiver module 11 may be configured to perform steps of receiving and sending information in the method, for example, steps S740, S760, S751, and S752; and the processing module 12 may be configured to perform a processing step in the method, for example, steps S710 and S750.

When the apparatus 10 is configured to perform the method in FIG. 8, the transceiver module 11 may be configured to perform steps of receiving and sending information in the method, for example, steps S813 and S810; and the processing module 12 may be configured to perform a processing step in the method.

When the apparatus 10 is configured to perform the method in FIG. 9, the transceiver module 11 may be configured to perform steps of receiving and sending information in the method, for example, steps S910, S920, S950, S960, S980, S981, and S982; and the processing module 12 may be configured to perform a processing step in the method.

When the apparatus 10 is configured to perform the method in FIG. 10A and FIG. 10B, the transceiver module 11 may be configured to perform steps of receiving and sending information in the method, for example, steps S1002, S1003, S1004, S10082, S10084, S10085, S10089, S1010, S1021, and S1022; and the processing module 12 may be configured to perform a processing step in the method.

It should be understood that specific processes in which the units perform the foregoing corresponding steps are described in detail in the foregoing method embodiments. For brevity, details are not described herein again.

In a design, the apparatus 10 may correspond to the second network element in the foregoing method embodiment, or may be a component (for example, a chip) of the second network element.

The apparatus 10 may implement corresponding steps or procedures performed by the second network element in the foregoing method embodiment. The transceiver module 11 may be configured to perform receiving and sending related operations of the second network element in the foregoing method embodiment, and the processing module 12 may be configured to perform a processing related operation of the second network element in the foregoing method embodiment.

In a possible implementation, the transceiver module 11 is configured to receive a first NAS security establishment request security-protected based on a first NAS security context, where the first NAS security establishment request is used to request to establish a second NAS connection between a terminal device and the second network element, and the first NAS security context is used to perform security protection on communication between the terminal device and a first network element; and the processing module 12 is configured to obtain a second NAS security context corresponding to the second NAS connection in response to the first NAS security establishment request, where the second NAS security context is used to perform security protection on communication between the terminal device and the second network element.

In another possible implementation, the transceiver module 11 is configured to receive a first NAS security establishment request security-protected based on a second NAS security context, where the first NAS security establishment request is used to request to establish a second NAS connection between a terminal device and the second network element, and the second NAS security context is used to perform security protection on communication between the terminal device and the second network element; and the processing module 12 is configured to obtain the second NAS security context corresponding to the second NAS connection in response to the first NAS security establishment request, where the second NAS security context is used to perform security protection on communication between the terminal device and the second network element.

When the apparatus 10 is configured to perform the method in FIG. 5, the transceiver module 11 may be configured to perform steps of receiving and sending information in the method, for example, steps S532 and S540; and the processing module 12 may be configured to perform a processing step in the method.

When the apparatus 10 is configured to perform the method in FIG. 6, the transceiver module 11 may be configured to perform steps of receiving and sending information in the method, for example, steps S690, S601, and S602; and the processing module 12 may be configured to perform a processing step in the method, for example, step S603.

When the apparatus 10 is configured to perform the method in FIG. 6, the transceiver module 11 may be configured to perform steps of receiving and sending information in the method, for example, steps S751 and S752; and the processing module 12 may be configured to perform a processing step in the method, for example, step S753.

When the apparatus 10 is configured to perform the method in FIG. 8, the transceiver module 11 may be configured to perform steps of receiving and sending information in the method, for example, steps S832 and S840; and the processing module 12 may be configured to perform a processing step in the method.

When the apparatus 10 is configured to perform the method in FIG. 9, the transceiver module 11 may be configured to perform steps of receiving and sending information in the method, for example, steps S903, S904, S905, and S907; and the processing module 12 may be configured to perform a processing step in the method.

When the apparatus 10 is configured to perform the method in FIG. 10A and FIG. 10B, the transceiver module 11 may be configured to perform steps of receiving and sending information in the method, for example, steps S10085, S10086, S10088, S10089, S1022, S1023, S1040, and S1050; and the processing module 12 may be configured to perform a processing step in the method.

In a design, the apparatus 10 may correspond to the security network element in the foregoing method embodiment, or may be a component (for example, a chip) of the security network element.

The apparatus 10 may implement corresponding steps or procedures performed by the security network element in the foregoing method embodiment. The transceiver module 11 may be configured to perform receiving and sending related operations of the security network element in the foregoing method embodiment, and the processing module 12 may be configured to perform a processing related operation of the security network element in the foregoing method embodiment.

In a possible implementation, the transceiver module 11 is configured to obtain a NAS primary security context corresponding to a terminal device; and the transceiver module 11 is further configured to send a first correspondence to a repository function network element, where the first correspondence includes a correspondence between a global identifier of the terminal device and an identifier of the security network element.

When the apparatus 10 is configured to perform the method in FIG. 9, the transceiver module 11 may be configured to perform steps of receiving and sending information in the method, for example, steps S920, S940, S950, S982, S905, and S907; and the processing module 12 may be configured to perform a processing step in the method, for example, step S906.

When the apparatus 10 is configured to perform the method in FIG. 10A and FIG. 10B, the transceiver module 11 may be configured to perform steps of receiving and sending information in the method, for example, steps S1004, S10082, S10084, S10086, S10088, S1021, and S1023; and the processing module 12 may be configured to perform a processing step in the method, for example, steps S10083, S10087, and S1030.

It should be further understood that the apparatus 10 herein is embodied in a form of a functional module. A term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has functions of implementing corresponding steps performed by a device (for example, the terminal device or the network device) in the foregoing methods. The functions may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in method embodiments.

In addition, the transceiver module 11 may alternatively be a transceiver circuit (for example, may include a receiving circuit and a sending circuit), and the processing module may be a processing circuit.

FIG. 12 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 12, the apparatus 20 further includes the memory 22, and the memory 22 is configured to store the computer program or instructions and/or data. The memory 22 and the processor 21 may be integrated, or may be disposed separately. Optionally, there are one or more memories 22.

Optionally, as shown in FIG. 12, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the terminal device in the foregoing method embodiments.

In another solution, the apparatus 20 is configured to implement operations performed by the access network device in the foregoing method embodiments.

In still another solution, the apparatus 20 is configured to implement operations performed by the first network element in the foregoing method embodiments.

In still another solution, the apparatus 20 is configured to implement operations performed by the second network element in the foregoing method embodiments.

In another solution, the apparatus 20 is configured to implement operations performed by the security network element in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another proper type.

FIG. 13 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device, the access network device, the first network element, the second network element, or the security network element in the foregoing method embodiments.

For example, the logic circuit 31 is configured to implement processing related operations performed by the terminal device, the access network device, the first network element, the second network element, or the security network element in the foregoing method embodiments; and the input/output interface 32 is configured to implement sending and/or receiving related operations performed by the terminal device, the access network device, the first network element, the second network element, or the security network element in the foregoing method embodiments.

An embodiment of this application further provides a computer-readable storage medium. The computer-readable storage medium stores computer instructions used to implement the method performed by the terminal device, the access network device, the first network element, the second network element, or the security network element in the foregoing method embodiments.

For example, when the computer program is executed by a computer, the computer is enabled to implement the method performed by the terminal device, the access network device, the first network element, the second network element, or the security network element in the foregoing method embodiments.

An embodiment of this application further provides a computer program product, including instructions. When the instructions are executed by a computer, the method performed by the terminal device, the access network device, the first network element, the second network element, or the security network element in the foregoing method embodiments is implemented.

An embodiment of this application further provides a communication system, including the foregoing terminal device, access network device, first network element, and second network element.

An embodiment of this application further provides a communication system, including the foregoing terminal device, access network device, first network element, second network element, and security network element.

For interpretations and beneficial effects of the related content in any one of the apparatuses provided above, refer to the corresponding method embodiment provided above. Details are not described herein again.

In several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or any other programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, a first message from a first network element through a first access network device, wherein the first message is used to activate security protection for a first non-access stratum connection between the terminal device and the first network element;
generating, by the terminal device, a first security context corresponding to the first non-access stratum connection in response to the first message; and
sending, by the terminal device to a second network element through a second access network device, a first establishment request security-protected based on the first security context, wherein the first establishment request is used to request to establish a second non-access stratum connection between the terminal device and the second network element, wherein
the first access network device and the second access network device are a same device or different devices.

2. The method according to claim 1, wherein
the terminal device determines that a non-access stratum type to which the first non-access stratum connection belongs is a first non-access stratum type, wherein
the first non-access stratum type represents that the first non-access stratum connection is a connection between the terminal device and a network element of a first network element type, and a type of the first network element is the first network element type; and
generating, by the terminal device, the first security context corresponding to the first non-access stratum connection in response to the first message comprises:
generating, by the terminal device, the first security context corresponding to the first non-access stratum connection based on the first non-access stratum type, wherein the first security context is used to perform security protection on communication between the terminal device and the first network element.

3. The method according to claim 2, wherein the first message comprises first indication information indicating that the non-access stratum type to which the first non-access stratum connection belongs is the first non-access stratum type; and
that the terminal device determines that the non-access stratum type to which the first non-access stratum connection belongs is the first non-access stratum type comprises:
determining, by the terminal device based on the first indication information, that the non-access stratum type to which the first non-access stratum connection belongs is the first non-access stratum type.

4. The method according to claim 2 or 3, wherein the method further comprises:
receiving, by the terminal device, a second message from the second network element, wherein the second message is used to activate security protection for the second non-access stratum connection;
generating, by the terminal device, a second security context corresponding to the second non-access stratum connection in response to the second message; and
performing, by the terminal device, security protection on communication between the terminal device and the second network element based on the second security context.

5. The method according to claim 4, wherein the second message comprises second indication information indicating that a non-access stratum type to which the second non-access stratum connection belongs is a second non-access stratum type; and
the second non-access stratum type represents that the second non-access stratum connection is a connection between the terminal device and a network element of a second network element type, and a type of the second network element is the second network element type.

6. The method according to claim 4 or 5, wherein the second message further comprises a first identifier, and the first identifier is used to determine the second network element; and the method further comprises:
receiving, by the terminal device, a second identifier from the first network element through the first non-access stratum connection, wherein the second identifier is an identifier that is determined by the first network element and that identifies the second network element; and
determining, by the terminal device based on the first identifier and the second identifier, whether the second network element is an authorized network element.

7. The method according to any one of claims 1 to 6, wherein sending, by the terminal device to the second network element through the second access network device, the first establishment request security-protected based on the first security context comprises:
sending, by the terminal device, a third message to the access network device, wherein the third message comprises a first parameter and the first establishment request security-protected based on the first security context, and the first parameter is used by the access network device to determine the second network element type to which the second network element belongs.

8. The method according to claim 7, wherein the first parameter comprises service information that can be processed by the network element of the second network element type and/or type information indicating that the non-access stratum type of the second non-access stratum connection is the second non-access stratum type; and
the second non-access stratum type represents that the second non-access stratum connection is a connection between the terminal device and the network element of the second network element type.

9. The method according to claim 7 or 8, wherein the third message further comprises third indication information, and the third indication information indicates that the second non-access stratum connection is an N^{th} non-access stratum connection, wherein N is an integer greater than 1.

10. The method according to any one of claims 1 to 9, wherein before receiving, by the terminal device, the first message from the first network element through the first access network device, the method further comprises:
sending, by the terminal device, a second establishment request to the first network element through the first access network device, wherein the second establishment request is used to request to establish the first non-access stratum connection between the terminal device and the first network element.

11. The method according to claim 10, wherein sending, by the terminal device, the second establishment request to the first network element through the first access network device comprises:
sending, by the terminal device, a fourth message to the first access network device, wherein the fourth message comprises the second establishment request and a second parameter, and the second parameter is used by the access network device to determine the first network element type to which the first network element belongs.

12. The method according to claim 11, wherein the second parameter comprises service information that can be processed by the network element of the first network element type and/or type information indicating that the non-access stratum type of the first non-access stratum connection is the first non-access stratum type; and
the first non-access stratum type represents that the first non-access stratum connection is a connection between the terminal device and the network element of the first network element type.

13. The method according to any one of claims 1 to 12, wherein the first establishment request security-protected based on the first security context comprises:
a first establishment request encrypted based on the first security context.

14. A communication method, comprising:
receiving, by an access network device, a third message from a terminal device, wherein the third message comprises a first parameter and a first establishment request security-protected based on a first security context, and the first establishment request is used to request to establish a second non-access stratum connection between the terminal device and a first core network element;
determining, by the access network device, a second network element type based on the first parameter, wherein the second network element type represents a type of the first core network element;
determining, by the access network device, an identifier of a second network element based on the second network element type; and
sending, by the access network device to the second network element, the first establishment request security-protected based on the first security context.

15. The method according to claim 14, wherein determining, by the access network device, the second network element type based on the first parameter comprises:
determining, by the access network device based on the first parameter, that a non-access stratum type to which the second non-access stratum connection belongs is a second non-access stratum type, wherein
the second non-access stratum type represents that the second non-access stratum connection is a connection between the terminal device and a network element of the second network element type.

16. The method according to claim 14 or 15, wherein the first parameter comprises service information that can be processed by the network element of the second network element type and/or type information indicating that the non-access stratum type of the second non-access stratum connection is the second non-access stratum type; and
the second non-access stratum type represents that the second non-access stratum connection is a connection between the terminal device and the network element of the second network element type.

17. The method according to any one of claims 14 to 16, wherein the third message further comprises third indication information, and the third indication information indicates that the second non-access stratum connection is an N^{th} non-access stratum connection, wherein N is an integer greater than 1.

18. The method according to any one of claims 14 to 17, wherein the method further comprises:
receiving, by the access network device, a fourth message from the terminal device, wherein the fourth message comprises a second establishment request and a second parameter, and the second establishment request is used to request to establish a first non-access stratum connection between the terminal device and a second core network element;
determining, by the access network device, a first network element type based on the second parameter, wherein the first network element type represents a type of the second core network element;
determining, by the access network device, an identifier of a first network element based on the first network element type; and
sending, by the access network device, the second establishment request to the first network element.

19. The method according to claim 18, wherein determining, by the access network device, the first network element type based on the second parameter comprises:
determining, by the access network device based on the second parameter, that a non-access stratum type to which the first non-access stratum connection belongs is a first non-access stratum type, wherein the first non-access stratum type represents that the first non-access stratum connection is a connection between the terminal device and a network element of the first network element type.

20. The method according to claim 18 or 19, wherein the second parameter comprises service information that can be processed by the network element of the first network element type and/or type information indicating that the non-access stratum type of the first non-access stratum connection is the first non-access stratum type; and
the first non-access stratum type represents that the first non-access stratum connection is a connection between the terminal device and the network element of the first network element type.

21. A communication method, comprising:
receiving, by a second network element, a first establishment request security-protected based on a first security context, wherein the first establishment request is used to request to establish a second non-access stratum connection between a terminal device and the second network element, and the first security context is used to perform security protection on communication between the terminal device and a first network element; and
obtaining, by the second network element, a second security context corresponding to the second non-access stratum connection in response to the first establishment request, wherein the second security context is used to perform security protection on communication between the terminal device and the second network element.

22. The method according to claim 21, wherein obtaining, by the second network element, the second security context corresponding to the second non-access stratum connection in response to the first establishment request comprises:
receiving, by the second network element, the second security context; or
generating, by the second network element, the second security context.

23. The method according to claim 21 or 22, wherein the method further comprises:
sending, by the second network element, a second message to the terminal device, wherein the second message is used to activate security protection for the second non-access stratum connection.

24. The method according to claim 23, wherein the second message comprises second indication information indicating that a non-access stratum type to which the second non-access stratum connection belongs is a second non-access stratum type; and
the second non-access stratum type represents that the second non-access stratum connection is a connection between the terminal device and a network element of a second network element type, and a type of the second network element is the second network element type.

25. A communication system, comprising a terminal device, an access network device, and a second network element, wherein the terminal device is configured to perform the method according to any one of claims 1 to 13, the access network device is configured to perform the method according to any one of claims 14 to 20, and the second network element is configured to perform the method according to any one of claims 21 to 24.

26. A communication apparatus, wherein the apparatus comprises a module configured to perform the method according to any one of claims 1 to 13, or a module configured to perform the method according to any one of claims 14 to 20, or a module configured to perform the method according to any one of claims 21 to 24.

27. A communication apparatus, comprising:
a processor, configured to execute a computer program stored in a memory, to enable the apparatus to perform the method according to any one of claims 1 to 13, or to enable the apparatus to perform the method according to any one of claims 14 to 20, or to enable the apparatus to perform the method according to any one of claims 21 to 24.

28. A computer program product, wherein the computer program product comprises instructions for performing the method according to any one of claims 1 to 24.

29. A computer-readable storage medium, wherein the computer-readable storage medium stores a computer program, and when the computer program runs on a computer, the computer is enabled to perform the method according to any one of claims 1 to 24.

30. A communication method, comprising:
receiving, by a first network element, a second establishment request, wherein the second establishment request is used to request to establish a first non-access stratum connection between a terminal device and the first network element;
obtaining, by the first network element, a first security context corresponding to the first non-access stratum connection in response to the second establishment request; and
performing, by the first network element, security protection on communication between the first network element and the terminal device based on the first security context.

31. The method according to claim 30, wherein obtaining, by the first network element, the first security context in response to the second establishment request comprises:
generating, by the first network element, the first security context based on a first non-access stratum type to which the first non-access stratum connection belongs, wherein the first non-access stratum type represents that the first non-access stratum connection is a connection between the terminal device and a network element of a first network element type, and a type of the first network element is the first network element type; or
receiving, by the first network element, the first security context from a security network element.

32. The method according to claim 30 or 31, wherein the method further comprises:
sending, by the first network element, a third correspondence to a repository function network element, wherein the third correspondence comprises a correspondence between a temporary identifier and a global identifier of the terminal device.

33. The method according to any one of claims 30 to 32, wherein the method further comprises:
receiving, by the first network element, a first request message from a second network element, wherein the first request message is used to request the first network element to provide a second security context and/or a primary security context used to generate the second security context, and the second security context is used to establish a second non-access stratum connection between the terminal device and the second network element; and
sending, by the first network element, the second security context and/or the primary security context to the second network element.

34. The method according to any one of claims 30 to 33, wherein the method further comprises:
allocating, by the first network element, a second identifier to the second network element, wherein the second identifier identifies the second network element; and sending, by the first network element, the second identifier to the terminal device.

35. A communication method, comprising:
receiving, by a terminal device, a fifth message from a first network element through a first access network device, wherein the fifth message is used to activate security protection for a non-access stratum connection between the terminal device and a core network element;
generating, by the terminal device, a first security context corresponding to a first non-access stratum connection and a second security context corresponding to a second non-access stratum connection in response to the fifth message; and
sending, by the terminal device to a second network element through a second access network device, a first establishment request security-protected based on the second security context, wherein the first establishment request is used to request to establish the second non-access stratum connection between the terminal device and the second network element, wherein
the first access network device and the second access network device are a same device or different devices.

36. The method according to claim 35, wherein the terminal device determines that a non-access stratum type to which the first non-access stratum connection belongs is a first non-access stratum type, and determines that a non-access stratum type to which the second non-access stratum connection belongs is a second non-access stratum type, wherein the first non-access stratum type represents that the first non-access stratum connection is a connection between the terminal device and a network element of a first network element type, and a type of the first network element is the first network element type; the second non-access stratum type represents that the second non-access stratum connection is a connection between the terminal device and a network element of a second network element type, and a type of the second network element is the second network element type; and generating, by the terminal device, the first security context corresponding to the first non-access stratum connection and the second security context corresponding to the second non-access stratum connection in response to the fifth message comprises:
generating, by the terminal device, the first security context corresponding to the first non-access stratum connection based on the first non-access stratum type, and generating the second security context corresponding to the second non-access stratum connection based on the second non-access stratum type, wherein the first security context is used to perform security protection on communication between the terminal device and the first network element, and the second security context is used to perform security protection on communication between the terminal device and the second network element.

37. The method according to claim 35 or 36, wherein the method further comprises:
receiving, by the terminal device, a second message from the second network element, wherein the second message is used to activate security protection for the second non-access stratum connection;
determining, by the terminal device, the second non-access stratum type to which the second non-access stratum connection belongs, and determining the second security context based on the second non-access stratum type; and
performing, by the terminal device, security verification on the second message based on the second security context.

38. The method according to claim 37, wherein performing, by the terminal device, security verification on the second message based on the first security context comprises:
performing, by the terminal device, decryption and/or integrity verification on the second message based on the first security context.

39. The method according to claim 37 or 38, wherein the second message comprises second indication information indicating that the non-access stratum type to which the second non-access stratum connection belongs is the second non-access stratum type, wherein the second non-access stratum type represents that the second non-access stratum connection is a connection between the terminal device and the network element of the second network element type, and the type of the second network element is the second network element type.

40. The method according to any one of claims 37 to 39, wherein the second message further comprises a first identifier, and the first identifier is used to determine the second network element; and the method further comprises:
receiving, by the terminal device, a second identifier from the first network element through the first non-access stratum connection, wherein the second identifier is an identifier that is determined by the first network element and that identifies the second network element; and determining, by the terminal device based on the first identifier and the second identifier, whether the second network element is an authorized network element.

41. The method according to any one of claims 34 to 40, wherein sending, by the terminal device to the second network element through the second access network device, the first establishment request security-protected based on the second security context comprises:
sending, by the terminal device, a sixth message to the access network device, wherein the sixth message comprises a first parameter and the first establishment request security-protected based on the second security context, and the first parameter is used by the access network device to determine the second network element type to which the second network element belongs.

42. The method according to claim 41, wherein the first parameter comprises service information that can be processed by the network element of the second network element type and/or type information indicating that the non-access stratum type of the second non-access stratum connection is the second non-access stratum type; and the second non-access stratum type represents that the second non-access stratum connection is a connection between the terminal device and the network element of the second network element type.

43. The method according to claim 41 or 42, wherein the sixth message further comprises fourth indication information, and the fourth indication information indicates that the second non-access stratum connection is an N^{th} non-access stratum connection, wherein N is an integer greater than 1.

44. The method according to any one of claims 34 to 43, wherein before receiving, by the terminal device, the fifth message from the first network element through the first access network device, the method further comprises:
sending, by the terminal device, a second establishment request to the first network element through the first access network device, wherein the second establishment request is used to request to establish the first non-access stratum connection between the terminal device and the first network element.

45. The method according to claim 44, wherein sending, by the terminal device, the second establishment request to the first network element through the first access network device comprises: sending, by the terminal device, a fourth message to the first access network device, wherein the fourth message comprises the second establishment request and a second parameter, and the second parameter is used by the access network device to determine the first network element type to which the first network element belongs.

46. The method according to claim 45, wherein the second parameter comprises service information that can be processed by the network element of the first network element type and/or type information indicating that the non-access stratum type of the first non-access stratum connection is the first non-access stratum type; and the first non-access stratum type represents that the first non-access stratum connection is a connection between the terminal device and the network element of the first network element type.

47. The method according to claim 46, wherein the first establishment request security-protected based on the second security context comprises: a first establishment request encrypted and/or integrity-protected based on the second security context.

48. A communication method, comprising:
receiving, by an access network device, a sixth message from a terminal device, wherein the sixth message comprises a first parameter and a first establishment request security-protected based on a second security context, and the first establishment request is used to request to establish a second non-access stratum connection between the terminal device and a first core network element;
determining, by the access network device, a second network element type based on the first parameter, wherein the second network element type represents a type of the first core network element; and
determining, by the access network device, an identifier of a second network element based on the second network element type; and sending, by the access network device to the second network element, the first establishment request security-protected based on a first security context.

49. The method according to claim 48, wherein the first parameter comprises service information that can be processed by a network element of the second network element type and/or type information indicating that a non-access stratum type of the second non-access stratum connection is a second non-access stratum type; and the second non-access stratum type represents that the second non-access stratum connection is a connection between the terminal device and the network element of the second network element type.

50. The method according to claim 48 or 49, wherein the sixth message further comprises fourth indication information, and the fourth indication information indicates that the second non-access stratum connection is an N^{th} non-access stratum connection, wherein N is an integer greater than 1.

51. The method according to any one of claims 48 to 50, wherein the method further comprises:
receiving, by the access network device, a fourth message from the terminal device, wherein the fourth message comprises a second establishment request and a second parameter, and the second establishment request is used to request to establish a first non-access stratum connection between the terminal device and a second core network element;
determining, by the access network device, a first network element type based on the second parameter, wherein the first network element type represents a type of the second core network element; and
determining, by the access network device, an identifier of a first network element based on the first network element type; and sending, by the access network device, the second establishment request to the first network element.

52. The method according to claim 51, wherein the second parameter comprises service information that can be processed by a network element of the first network element type and/or type information indicating that a non-access stratum type of the first non-access stratum connection is a first non-access stratum type; and the first non-access stratum type represents that the first non-access stratum connection is a connection between the terminal device and the network element of the first network element type.

53. The method according to claim 52, wherein the first establishment request security-protected based on the second security context comprises: a first establishment request encrypted and/or integrity-protected based on the second security context.

54. A communication method, comprising:
receiving, by a second network element, a first establishment request security-protected based on a second security context, wherein the first establishment request is used to request to establish a second non-access stratum connection between a terminal device and the second network element, and the second security context is used to perform security protection on communication between the terminal device and the second network element; and
obtaining, by the second network element, the second security context corresponding to the second non-access stratum connection in response to the first establishment request, wherein the second security context is used to perform security protection on communication between the terminal device and the second network element.

55. The method according to claim 54, wherein obtaining, by the second network element, the second security context corresponding to the second non-access stratum connection in response to the first establishment request comprises:
receiving, by the second network element, the second security context; or generating, by the second network element, the second security context.

56. The method according to claim 54 or 55, wherein the method further comprises: sending, by the second network element, a second message to the terminal device, wherein the second message is used to activate security protection for the second non-access stratum connection.

57. The method according to claim 56, wherein the second message comprises second indication information indicating that a non-access stratum type to which the second non-access stratum connection belongs is a second non-access stratum type, wherein the second non-access stratum type represents that the second non-access stratum connection is a connection between the terminal device and a network element of a second network element type, and a type of the second network element is the second network element type.

58. The method according to claim 57, wherein the first establishment request security-protected based on the first security context comprises: a first establishment request encrypted and/or integrity protected based on the first security context.

59. A communication method, comprising:
obtaining, by a security network element, a non-access stratum primary security context corresponding to a terminal device; and
sending, by the security network element, a first correspondence to a repository function network element, wherein the first correspondence comprises a correspondence between a global identifier of the terminal device and an identifier of the security network element.

60. The method according to claim 59, wherein the method further comprises:
receiving, by the security network element, a second establishment request from a first network element, wherein the second establishment request is used to request to establish a first non-access stratum connection between the terminal device and the first network element; and
generating, by the security network element, a first security context based on a non-access stratum type to which the first non-access stratum connection belongs and the non-access stratum primary security context; and sending, by the security network element, the first security context to the first network element.

61. The method according to claim 59 or 60, wherein the method further comprises:
receiving, by the security network element, a second correspondence from the first network element, wherein the second correspondence comprises a correspondence between the global identifier of the terminal device and security capability information of the terminal device;
receiving, by the security network element, a third request message from a second network element for requesting to provide a second security context, wherein the second security context is used to establish a second non-access stratum connection between the terminal device and the second network element, and the third request message comprises the global identifier of the terminal device; and
determining, by the security network element, the security capability information of the terminal device based on the global identifier of the terminal device and the second correspondence; generating, by the security network element, the second security context based on the security capability information of the terminal device and a non-access stratum type to which the second non-access stratum connection belongs; and sending, by the security network element, the second security context to the second network element.

62. A communication apparatus, wherein the apparatus comprises a module configured to perform the method according to any one of claims 30 to 34, or a module configured to perform the method according to any one of claims 35 to 47, or a module configured to perform the method according to any one of claims 48 to 53, or a module configured to perform the method according to any one of claims 54 to 58, or a module configured to perform the method according to any one of claims 59 to 61.

63. A communication apparatus, comprising:
a processor, configured to execute a computer program stored in a memory, to enable the apparatus to perform the method according to any one of claims 30 to 34, or to enable the apparatus to perform the method according to any one of claims 35 to 47, or to enable the apparatus to perform the method according to any one of claims 48 to 53, or to enable the apparatus to perform the method according to any one of claims 54 to 58, or to enable the apparatus to perform the method according to any one of claims 59 to 61.

64. A computer program product, wherein the computer program product comprises instructions for performing the method according to any one of claims 30 to 61.

65. A computer-readable storage medium, wherein the computer-readable storage medium stores a computer program, and when the computer program runs on a computer, the computer is enabled to perform the method according to any one of claims 30 to 61.
